Europäisches Patentamt

European Patent Office

Office européen des brevets

(19)

(11) **EP 0 910 772 B1**

(12) **FASCICULE DE BREVET EUROPEEN**

(45) Date de publication et mention
de la délivrance du brevet:
**27.09.2000 Bulletin 2000/39**

(51) Int Cl.⁷: **F21V 7/04**, H01J 61/02,
G02B 17/00

(21) Numéro de dépôt: **97932874.7**

(22) Date de dépôt: **09.07.1997**

(86) Numéro de dépôt international:
**PCT/FR97/01251**

(87) Numéro de publication internationale:
**WO 98/01700 (15.01.1998 Gazette 1998/02)**

(54) **DISPOSITIF EMETTEUR/REFLECTEUR DE RAYONNEMENTS ELECTROMAGNETIQUES,
APPAREIL ET PROCEDE METTANT EN OEUVRE UN TEL DISPOSITIF**

EINRICHTUNG ZUM ÜBERTRAGEN/REFLEKTIEREN ELEKTROMAGNETISCHER
STRAHLEN;VORRICHTUNG UND VERFAHREN MIT EINER SOLCHEN EINRICHTUNG

ELECTROMAGNETIC RADIATION TRANSMITTER/REFLECTOR DEVICE, APPARATUS AND
METHOD THEREFOR

(84) Etats contractants désignés:
**AT BE CH DE DK ES FI FR GB IE IT LI NL SE**

(30) Priorité: **09.07.1996 FR 9608556
27.12.1996 FR 9616139**

(43) Date de publication de la demande:
**28.04.1999 Bulletin 1999/17**

(73) Titulaire: **Lumpp & Consultants
74150 Rumilly (FR)**

(72) Inventeur: **LUMPP, Christian
F 74150 Rumilly (FR)**

(74) Mandataire: **Hecké, Gérard
Cabinet HECKE
World Trade Center - Europole,
5, Place Robert Schuman,
BP 1537
38025 Grenoble Cedex 1 (FR)**

(56) Documents cités:
**EP-A- 0 457 242       EP-A- 0 534 853
EP-A- 0 709 620       DE-A- 2 940 632
DE-A- 4 205 183       DE-C- 3 301 395
US-A- 2 254 962       US-A- 4 596 935
US-A- 5 008 593       US-A- 5 103 381**

## Description

La présente invention concerne un dispositif émetteur/réflecteur de rayonnements électromagnétiques ultraviolets comprenant un tube en verre rectiligne percé de bout en bout d'un alésage de rétention d'un gaz ionisant en pression, allongé autour d'un axe et propre à délimiter un faisceau émetteur de rayonnements.

Elle concerne également des appareils et un procédé mettant en oeuvre un tel dispositif.

L'invention trouve une application particulièrement importante, bien que non exclusive, dans le domaine du traitement photochimique de matériaux par rayonnements ultraviolets avec des tubes émetteurs contenant un gaz ionisant à haute ou moyenne pression, par exemple utilisés dans l'industrie papetière, le textile, l'industrie des matières plastiques, l'industrie alimentaire, l'automobile ainsi que dans le domaine de l'imprimerie, notamment pour la polymérisation d'encres ou de vernis sur des films, par exemple constitués par des laizes de papier ou de carton.

Par haute ou moyenne pression en entend des pressions absolues de gaz supérieures ou égales à 2 bars (kg/cm$^2$), par exemple de 3 bars (kg/cm$^2$) pour une moyenne pression et supérieures à 5 bars (kg/cm$^2$) pour une haute pression, pouvant par exemple atteindre 100 bars (kg/cm$^2$).

L'invention n'est pas limitée aux types de produits à traiter. Elle peut par exemple être utilisée pour le séchage de produits en plaque, pour le séchage de certains vernis et adhésifs, pour le séchage de produits filaires allongés autour d'un axe, ou encore pour la stérilisation de produits liquides.

On connaît déjà des dispositifs pour la production et la réflexion de rayonnements ultraviolets comprenant un tube émetteur rectiligne et un réflecteur concave rectiligne ayant une section parabolique ou une section elliptique.

Ces dispositifs présentent des inconvénients. Ils sont en effet encombrants et nécessitent un tube émetteur entièrement séparé du réflecteur par une distance de plusieurs millimètres pour permettre un refroidissement efficace par circulation d'air entre tube émetteur et réflecteur.

On observe en effet des températures importantes de 600 à 900°C sur l'émetteur ultraviolet, alors que la température du réflecteur est nettement plus faible, par exemple de l'ordre de 50°C.

Les matériaux utilisés sont par ailleurs différents, les émetteurs étant en verre et les réflecteurs en métal réfléchissant, du type aluminium, c'est-à-dire présentant un coefficient de dilatation thermique très différent de celui du verre.

Les tubes de grandes longueurs des dispositifs de l'art antérieur présentent de plus un fléchissement au cours du temps.

Dans le cas plus particulièrement visé par l'invention, à savoir l'émission de rayonnements ultraviolets, les émetteurs connus entraînent également une formation d'ozone en quantité non négligeable.

La présente invention vise à fournir un dispositif émetteur/réflecteur de rayonnements, un appareil et un procédé mettant en oeuvre un tel dispositif, répondant mieux que ceux antérieurement connus aux exigences de la pratique, notamment en ce qu'elle propose un dispositif compact et peu encombrant, propre à limiter considérablement la production d'ozone tout en maximisant l'énergie photochimique utilisable et ce grâce à une conception structurelle permettant une excellente optimisation du rendement énergétique des rayonnements émis.

Dans ce but, l'invention propose notamment un dispositif émetteur/réflecteur de rayonnements ultraviolets comprenant un tube en verre rectiligne percé de bout en bout d'un alésage de rétention d'un gaz ionisant en haute ou moyenne pression, allongé autour d'un axe, propre à contenir un faisceau émetteur de rayonnements, et une surface réflectrice des rayonnements émis comportant deux ailes latérales longitudinales symétriques par rapport à un plan axial de l'alésage, la surface réflectrice étant au moins en partie solidaire du tube émetteur et présentant une section transversale au moins en partie parabolique, elliptique ou droite, ou encore au moins en partie sensiblement parabolique, sensiblement elliptique ou sensiblement droite, caractérisé en ce que les portions de surface réflectrice correspondant aux ailes latérales et présentant une section transversale au moins en partie parabolique ou elliptique, ou encore au moins en partie sensiblement parabolique ou sensiblement elliptique, appartiennent à une courbe (parabole ou ellipse) dont la génératrice au sommet est située à une distance $d$ de l'axe de l'alésage, telle que :

$$d = f \text{ et } 0 < d < r + e + 1 \text{ mm}$$

avec

$f$ : distance entre le foyer de la parabole ou de l'ellipse et la génératrice au sommet correspondante,

$r$ : distance entre l'axe et la surface interne de l'alésage dans le plan axial de l'alésage passant par la génératrice au sommet, et

$e$ : épaisseur du tube dans le plan axial, du côté de et passant par la génératrice au sommet.

Encore plus avantageusement chacune des deux portions d'extrémité des ailes latérales présente une section transversale strictement en portion de parabole ou d'ellipse ou encore strictement droite

Dans les modes de réalisation plus particulièrement décrits, la présente invention met en oeuvre un tube émetteur rectiligne dont le centre géométrique d'émission est confondu avec le foyer du réflecteur correspondant, également rectiligne et de section au moins en partie parabolique (par exemple pour traiter des surfaces planes), ou de section au moins en partie elliptique (par exemple pour traiter les surfaces courbes), la génératrice au sommet de la courbe de réflexion étant parallèle à l'axe confondu avec la ligne focale, et les arêtes d'extrémité des portions paraboliques ou elliptiques étant situées en dessous de la génératrice de l'alésage, de l'autre côté de celui-ci par rapport à ladite génératrice au sommet.

Plus précisément les émetteurs ultraviolets moyenne ou haute pression de l'invention plus particulièrement décrits ici sont des tubes dits "à décharge" comportant des électrodes à très haute température (supérieures à 1000° C) dites "électrodes chaudes".

L'émetteur est donc dénué de tout filament du type filament émetteur infrarouge.

L'arc électrique généré par les deux électrodes, respectivement situées de chaque côté du tube transparent, engendre un cylindre lumineux de section transversale constante généralement formé par un ou des iodures métalliques à l'état plasmatique, ou encore par du xénon ou un mélange mercure/xénon ou autre gaz ou terres rares, chaque extrémité du cylindre étant en forme de cônes lumineux dont les pointes sont confondues avec les électrodes.

Le cylindre lumineux, qui peut avantageusement être tronqué, par exemple aplati, comme on va le voir, présente une longueur totale constituée par la distance entre les deux électrodes, par exemple comprise entre quelques mm pour les émetteurs à arc court et plus généralement entre 30 mm et 2500 mm, et présente également et par exemple une section de même grandeur que, ou inférieure à, la section intérieure du tube transparent qui la renferme.

Le ou les iodures métalliques peuvent être issus de métaux purs ou d'alliages à savoir et par exemple, un mercure pur, un fer pur, un gallium pur, un fer/cobalt (mélange), un gallium/plomb (mélange), un mercure/gallium (mélange)etc.

Plus généralement le ou les gaz utilisés peuvent être purs (par exemple du xénon) ou sous forme de mélange (par exemple mercure/xénon).

La liste des mélanges de métaux, terres rares et/ou gaz mentionnés ci-dessus n'est bien entendu pas limitative.

Par ailleurs leur proportion respective est déterminée en fonction des longueurs d'onde des rayonnements recherchés, de façon connue en elle-même.

Dans des modes de réalisation avantageux on a de plus recours à l'une et/ou l'autre des dispositions suivantes :

- $d = r + e$ ;
- $r \leq d < r + e$ ;
- $d \leq r$ ;
- l'alésage est cylindrique;
- la section de l'alésage est un cercle au moins partiellement tronqué, de sorte que le faisceau rayonnant est de section transversale tronquée;
- la section de l'alésage est tronquée par un ou deux plans dioptriques perpendiculaires au plan axial de l'alésage, de sorte que le faisceau est par exemple de forme sensiblement rectangulaire s'inscrivant dans un cylindre (cas où il est doublement tronqué);
- la surface réflectrice est entièrement solidaire du tube;
- la paroi externe du tube comprend une partie en saillie en forme de dôme, ci-après dénommée goulotte, de surface externe adaptée à la paroi interne de l'alésage et agencée, par exemple en étant en portion de cylindre dans le cas d'un alésage cylindrique, pour renvoyer les rayonnements primaires émis vers la goulotte, en retour vers le foyer en général confondu avec l'axe de l'alésage, pour fonctionner sous une forme dite en rayonnement inverse, ladite goulotte étant symétrique par rapport au plan axial de l'alésage, située du coté de la génératrice au sommet par rapport à l'alésage, et recouverte d'une couche de matière réfléchissante;
- le tube est plein entre les portions d'extrémités des ailes latérales dont les faces externes forment au moins en partie ladite surface réflectrice par réfraction dioptrique;
- la surface réflectrice est entièrement recouverte d'une couche de matériau réfléchissant;
- la surface réflectrice est de section transversale parabolique ou en partie parabolique et le tube comporte une face externe, dite face inférieure, de jonction des extrémités des ailes, située du coté opposé à la génératrice au sommet par rapport à l'alésage, plane et perpendiculaire au plan axial contenant ladite génératrice au sommet;
- la surface réflectrice est de section transversale elliptique ou en partie elliptique et le tube comporte une face externe de jonction des extrémités des ailes, située du coté opposé à la génératrice au sommet par rapport à l'alésage, convexe, selon une courbe symétrique par rapport au plan axial contenant la génératrice au sommet, ladite face externe étant agencée pour diriger les rayons émis vers le plan axial de l'alésage, par exemple vers le second foyer de l'ellipse;
- la section transversale de la face externe est droite sur une première partie, perpendiculaire et centrée par rapport au plan axial, et courbe sur une deuxième partie;
- le tube comporte, du coté opposé à la génératrice au sommet, une portion de verre pleine en partie évidée, formant une cavité dioptrique longitudinale;
- ladite cavité comprend une face supérieure concave en portion de cylindre, d'axe confondu avec l'axe de l'alésage, et par exemple de rayon égal à $r + e$, et des faces latérales parallèles au plan axial de l'alésage sur une hauteur s'inscrivant dans un angle au centre $\alpha_2$, ledit angle $\alpha_2$ étant l'angle pour lequel les rayonnements primaires issus du faisceau plasmatique sont entièrement réfractés par le plan dioptrique de la face inférieure, de jonction des ailes du dispositif.

En évitant d'émettre dans l'angle $\alpha_2$ on évite ainsi de perdre des rayonnements de façon significative;

- la cavité dioptrique comporte une face inférieure convexe en portion de cylindre, dont l'axe est situé du coté opposé à l'axe de l'alésage, et le rayon de courbure est agencé pour ramener les rayonnements lumineux dans une ou des directions déterminées, par exemple parallèlement au plan axial ou vers le second foyer de l'ellipse;
- la goulotte comporte une face externe réfléchissante située à une distance x de l'axe de l'alésage, telle que :

    $r < x \leq 2y$ avec

    y : distance entre la surface interne de l'alésage et le point de discontinuité de la pente de la surface réflectrice de l'aile entre goulotte et portion parabolique ou elliptique;
- le dispositif comporte de plus deux plaques longitudinales latérales réflectrices, réfléchissantes, situées de part et d'autre des extrémités des ailes, symétriquement par rapport au plan axial;
- l'alésage comporte une face interne, du coté opposé à la génératrice au sommet par rapport à l'axe, munie d'un évidemment dioptrique longitudinal présentant une paroi inférieure en portion de cylindre de rayon, par exemple r' > r et des parois latérales parallèles au plan axial de l'alésage. Mais r' peut également être égal ou inférieur à r;
- le tube est en forme de cylindre muni de deux pattes latérales longitudinales, symétriques par rapport au plan axial passant par la génératrice au sommet, dirigées vers le plan d'irradiation et dont les surfaces externes respectives forment les ailes en portion de parabole ou d'ellipse;
- les pattes sont solidaires du tube;
- les pattes sont séparables du tube par exemple cylindrique, et comprennent des faces de jonction en portion de cylindre concave, de forme complémentaire avec la face externe du tube avec lequel elles peuvent être ou non en contact;
- les faces d'extrémité des pattes sont perpendiculaires au plan axial contenant la génératrice au sommet;
- les faces d'extrémité des pattes sont concaves et agencées pour diriger les rayonnements incidents sur lesdites faces vers le plan axial de l'alésage contenant la génératrice au sommet;
- l'alésage cylindrique comporte sur sa surface interne opposée à la génératrice au sommet, deux excroissances de section sensiblement triangulaire, présentant un côté parallèle au plan axial, et l'autre situé du côté dudit plan axial, en portion de courbe convexe, lesdites excroissances étant symétriques par rapport au plan axial contenant la génératrice et telles que les côtés de l'angle au centre de l'alésage $\alpha_2$ dans lequel elles s'inscrivent passent par les deux pointes d'extrémité de la patte correspondante;
- la portion supérieure de la surface externe du tube est recouverte d'une matière réfléchissante, par exemple sur un angle au centre $2\alpha_5$ par rapport à l'axe d'alésage, $\alpha_5$ étant défini comme précisé ci-après dans la description, les deux ailes latérales étant entièrement situées à distance du tube émetteur, par exemple de sorte qu'un passage de circulation d'un gaz de refroidissement est ménagé entre le tube et les ailes latérales réfléchissantes;
- les ailes présentant une section au moins en partie parabolique ou elliptique, sont respectivement prolongées en partie supérieure par une portion cylindrique coaxiale avec l'alésage, entièrement située à distance du tube émetteur.

Dans ce cas la portion supérieure de la surface externe du tube est recouverte de matière réfléchissante sur un angle $\alpha'_5$ inférieur à $\alpha_5$, complétant les parties de cylindres;

- les deux ailes latérales sont planes;
- les deux ailes latérales sont constituées par des plaques réfléchissantes longitudinales planes;
- le tube comporte des chambres d'électrode de section transversale interne supérieure ou égale à la section transversale interne du faisceau émetteur de rayonnements, par exemple $\geq$ 1,5 fois à cette dernière, ou > 2 fois, et par exemple 6 fois supérieure;
- la section transversale du faisceau émetteur est inférieure ou égale à de l'ordre de 45 mm$^2$, voire 30 mm$^2$, plus précisément encore 10 mm$^2$, voire 3 mm$^2$;
- le faisceau est en forme de fente longitudinale de section transversale rectangulaire ou sensiblement rectangulaire de largeur inférieure à la moitié de la longueur, par exemple au 1/5ème ou au 1/10ème de la longueur;
- le diamètre ou la dimension transversale maximale de la section interne du faisceau émetteur de rayonnements du tube sur la longueur d'arc utile, est inférieur ou égal à 9 mm, $\leq$ à de l'ordre de 6 mm, $\leq$ à de l'ordre de 4 mm ou encore $\leq$ à de l'ordre de 2, voir 1, par exemple 0,5 mm.

L'invention propose de plus des appareils de traitement et notamment de séchage de produits disposés en nappe plane ou courbe, comportant au moins un dispositif du type décrit ci-dessus, et un procédé d'application de rayonnements à un produit défilant en continu ou semi continu utilisant un tel dispositif.

L'invention propose également un procédé d'application de rayonnements à un produit en nappe ou disposé sur une surface plane ou courbe, caractérisé en ce que on irradie le produit avec un faisceau cylindrique ou de forme sensiblement cylindrique plasmatique de rayonnements ultraviolets allongé autour d'un axe, de section transversale circulaire constante, ou partiellement tronquée, du faisceau émetteur de rayonnements inférieure à 45 mm², et par exemple présentant une dimension radiale maximale inférieure ou égale à de l'ordre de 9 mm.

Le faisceau plasmatique est en fait un faisceau allongé autour d'un axe dont la forme périphérique est influencée par la forme de la paroi externe de l'alésage qui le contient, forme elle-même et par exemple de section uniforme sensiblement circulaire, entraînant alors une forme sensiblement cylindrique.

Par section constante, on entend une section transversale constante sur la longueur d'arc utile du faisceau, n'incluant donc pas les chambres d'électrodes.

Avantageusement on irradie le produit avec un faisceau cylindrique ou de forme sensiblement cylindrique plasmatique de rayonnements ultraviolets allongé autour d'un axe, de section transversale constante et inférieure ou égale à 30 mm², ou encore 10 mm², par exemple présentant une dimension radiale maximale inférieure ou égale à de l'ordre de 4 mm, inférieure ou égale à de l'ordre de 2 mm, voire inférieure ou égale à de l'ordre du mm, seules les limites physiques de fabrication d'un tube en verre étant à prendre en compte.

Dans un mode de réalisation avantageux on irradie le produit avec des rayonnements primaires issus directement du faisceau plasmatique et simultanément avec des rayonnements secondaires issus des rayonnements primaires par réfraction dioptrique sur une paroi réflectrice présentant une section transversale au moins en partie parabolique ou elliptique.

Egalement avantageusement on irradie le produit avec des rayonnements entièrement issus et réfléchis par un même tube de délimitation du faisceau plasmatique, comportant une surface réflectrice solidaire du tube émetteur dudit faisceau plasmatique, définissant une image lumineuse inverse, rendue possible grâce à l'absence de filament.

Le concept d'image lumineuse inverse qui sera également détaillé ci-après, signifie que les rayonnements primaires émis au niveau de l'axe du faisceau par le faisceau plasmatique sont réfléchis sous forme de rayons secondaires, qui viennent se superposer, sensiblement ou strictement, avec les rayonnements primaires émis dans l'autre sens par ledit faisceau.

Avantageusement on irradie avec un cylindre plasmatique de section cylindrique tronquée sur deux côtés, sur un côté ou encore comportant en partie inférieure et perpendiculaire au plan axial une section courbe convexe.

Avantageusement la longueur du faisceau plasmatique de section constante est supérieure à trente centimètres, est supérieure à un mètre, et avantageusement supérieure à 2 mètres, voire 3 mètres.

Dans un mode de réalisation avantageux la tension linéique a une valeur supérieure de l'ordre de 30 Volts/cm.

Avantageusement la tension linéique a une valeur supérieure ou égale à 50Volts/cm, avantageusement supérieure ou égale à 100 Volts/cm.

Encore plus avantageusement on associe en combinaison une longueur de faisceau plasmatique supérieure à 1m50 et une tension linéique supérieure à 20Volts/cm, par exemple 80Volts/cm.

Dans un mode de réalisation avantageux, le rayon de la section transversale du faisceau plasmatique cylindrique, par rapport au diamètre équivalent $\underline{d}$ du tube est tel que $\frac{1}{100}\,d \le r \le \frac{1}{2}\,d.$, par exemple $\frac{1}{50}\,d \le r \le \frac{1}{4}\,d$ ou $r \le \frac{1}{8}\,d$, $r \le \frac{1}{10}\,d$, et/ou $r \ge \frac{1}{20}\,d$.

Dans un mode également avantageux, le faisceau de petit diamètre du type décrit ci-dessus, est incorporé dans un dispositif comportant une surface réflectrice des rayonnements émis comprenant deux ailes latérales longitudinales symétriques par rapport à un plan axial de l'alésage, la surface réflectrice présentant une section transversale au moins en partie parabolique, elliptique ou droite, ou encore au moins en partie sensiblement parabolique, sensiblement elliptique ou sensiblement droite, caractérisé en ce que les deux ailes sont séparées en partie supérieure par un espace ou fente médiane longitudinale, s'étendant de part et d'autre de la génératrice supérieure des ailes, par exemple en partie hyperbolique ou parabolique, d'alimentation en air de refroidissement, ledit espace étant coiffé à distance par une plaque plane, c'est-à-dire plate et horizontale réflectrice des rayons émis par ledit faisceau ayant traversé la fente.

Avantageusement la plaque est ajourée et sert également de support des ailes, les conditions 0 < d < r + e + 1 mm étant par ailleurs respectées.

L'invention sera mieux comprise à la lecture de la description qui suit de plusieurs modes de réalisation donnés à titre d'exemples non limitatifs.

La description se réfère aux dessins qui l'accompagnent dans lesquels :

- Les figures 1 à 5 sont des vues en coupe de variantes d'un premier mode de réalisation d'émetteur/réflecteur selon l'invention, monobloc, comportant une surface réflectrice de section en tout ou en partie parabolique.
- Les figures 6 à 10 sont des vues en coupe de variantes d'un second mode de réalisation d'un émetteur/réflecteur selon l'invention, monobloc, comportant une surface réflectrice de section en tout ou en partie elliptique.
- La figure 11 illustre d'autres variantes du second mode de réalisation, avec goulottes cylindriques supérieures d'épaisseurs différentes.
- La figure 12 et 12 A illustrent une variante du second mode de réalisation.
- La figure 13 est une autre variante du second mode de réalisation.
- Les figures 14 à 16 sont des vues en coupe de variantes du premier mode de réalisation avec pattes.

- La figure 17 illustre une autre variante du premier mode de réalisation avec pattes et évidements longitudinaux sur la face interne de l'alésage.
- Les figures 18, 18A et 18B, illustrent une autre variante du premier mode de réalisation avec pattes et ergots longitudinaux sur la surface interne de l'alésage.
- La figure 19 illustre une autre variante du premier mode de réalisation avec alésage de section sensiblement rectangulaire, et face supérieure de la goulotte en forme de cylindre aplati.
- La figure 19 A montre une autre variante avec pattes et fond arrondi.
- La figure 19 B montre une autre variante avec patte et évidement dans la paroi interne de l'alésage.
- Les figures 20 à 24 sont des vues en coupe de variantes d'un troisième mode de réalisation d'un émetteur/réflecteur selon l'invention avec ailes latérales entièrement à distance du tube émetteur et comportant une surface réfléchissante de section elliptique (figure 20) ou parabolique (figures 21 à 24).
- La figure 25 est une vue en coupe d'un quatrième mode de réalisation d'un émetteur/réflecteur selon l'invention avec ailes latérales entièrement à distance du tube émetteur et comportant une surface réfléchissante de section elliptique.
- Les figures 26 A et 26 B sont des vues en coupe d'un cinquième mode de réalisation avec réflecteur en trois parties, situé entièrement à distance de l'émetteur cylindrique comprenant un alésage tronqué ou un alésage avec évidement.
- Les figures 27 A, 27 A', 27 B, 27C et 27 D montrent en coupe partielle un sixième mode de réalisation d'un dispositif selon l'invention, avec alésage tronqué.
- La figure 28 est une vue en coupe longitudinale d'un mode de réalisation d'une chambre à électrodes d'un tube émetteur du type décrit en référence à la figure 10.
- La figure 29 est une vue en coupe d'un mode de réalisation d'une chambre à électrode d'un tube émetteur selon la figure 27A.
- La figure 30 illustre une vue en coupe longitudinale d'une variante de la figure 28, sans électrode.
- Les figures 31 et 31A sont des vues en coupe, respectivement longitudinale et transversale, d'un autre mode de réalisation d'une extrémité à électrode d'un tube émetteur selon l'invention.
- La figure 32 montre schématiquement des coupes transversales (A, A', B, C, D, D' et E) d'émetteur/réflecteur selon divers modes de réalisation de l'invention.
- La figure 33 est une vue en coupe, partielle, d'un premier mode de réalisation d'un appareil comprenant un émetteur/réflecteur selon l'invention.
- La figure 34 est une vue en perspective, en partie éclatée, d'un second mode de réalisation d'un appareil selon l'invention.
- La figure 35 est une vue en coupe d'un troisième mode de réalisation d'un appareil selon l'invention comprenant plusieurs dispositifs disposés parallèlement.
- La figure 36 est une vue en coupe d'un quatrième mode de réalisation d'un appareil selon l'invention, comprenant deux dispositifs disposés en opposition.
- La figure 37 est une vue en coupe d'un cinquième mode de réalisation d'un appareil selon l'invention comprenant plusieurs dispositifs disposés angulairement.
- Les figures 38 A, B et C, sont des vues schématiques, de dessus, d'appareils selon trois modes de réalisation de l'invention permettant l'optimisation du traitement de produits en plaque.
- La figure 39 est une vue schématique montrant la répartition de la densité de rayonnement dans un tube selon un mode de réalisation de l'invention, en fonction de trois types de tension linéique : 10 Volts/cm, 30 Volts/cm et 100 Volts/cm.
- La figure 40 A montre un dispositif selon un autre mode de réalisation de l'invention, avec paroi réflectrice parabolique, tube de petit diamètre et faisceau plasmatique cylindrique décollé des parcis du tube.
- La figure 40 B montre un autre mode de réalisation avec tube cylindrique de petit diamètre, montrant trois sections de faisceau plasmatique scus trois tensions différentes.
- La figure 41 montre un dispositif mettant en oeuvre le procédé selon un mode de réalisation de l'invention avec faisceau plasmatique de petit diamètre par rapport à celui de l'alésage interne.

Dans la suite de la description, on utilisera de préférence les mêmes numéros de référence pour désigner des éléments identiques ou de même type.

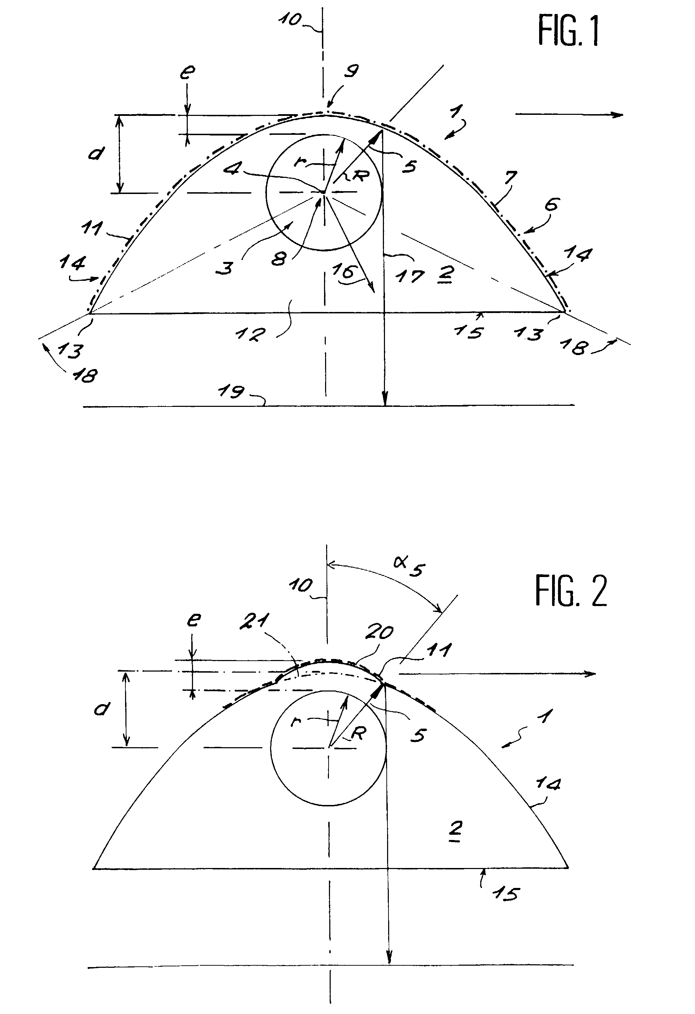

Les figures 1 à 4 montrent un dispositif 1 en coupe transversale comprenant un tube 2 rectiligne en verre, par exemple en quartz extrudé.

Le tube 2 est percé de bout en bout d'un alésage cylindrique 3, d'axe 4 et de rayons r, obtenu par filage.

Il est fermé à chaque extrémité par des bouchons porteurs d'électrodes (non représentés) qui seront détaillés ultérieurement, et contient un gaz ionisant, par exemple un iodure de mercure, à moyenne pression, par exemple 3 bars, propre à émettre des rayonnements ultraviolets 5, lorsque le tube est sous tension et qu'il crée un arc plasmatique entre les électrodes, de façon connue en elle-même.

Le tube 2 comporte une paroi 6 munie d'une surface externe 7 de section au moins en partie parabolique, d'équation $y = \frac{x^2}{4f}$, f étant la distance focale de la parabole entre le foyer 8 qui est confondu avec l'axe 4 de l'alésage et la génératrice au sommet 9 de la parabole, située dans le plan axial de symétrie 10 de l'alésage.

L'épaisseur du tube dans le plan axial 10, de la paroi située du côté de la génératrice au sommet 9, étant e et d étant la distance entre l'axe 4 de l'alésage et la génératrice au sommet 9, il vient :

$$d = f \text{ et, } d = r + e. \text{ (figure 1)}$$

$$d < r + e \text{ (figure 2)}$$

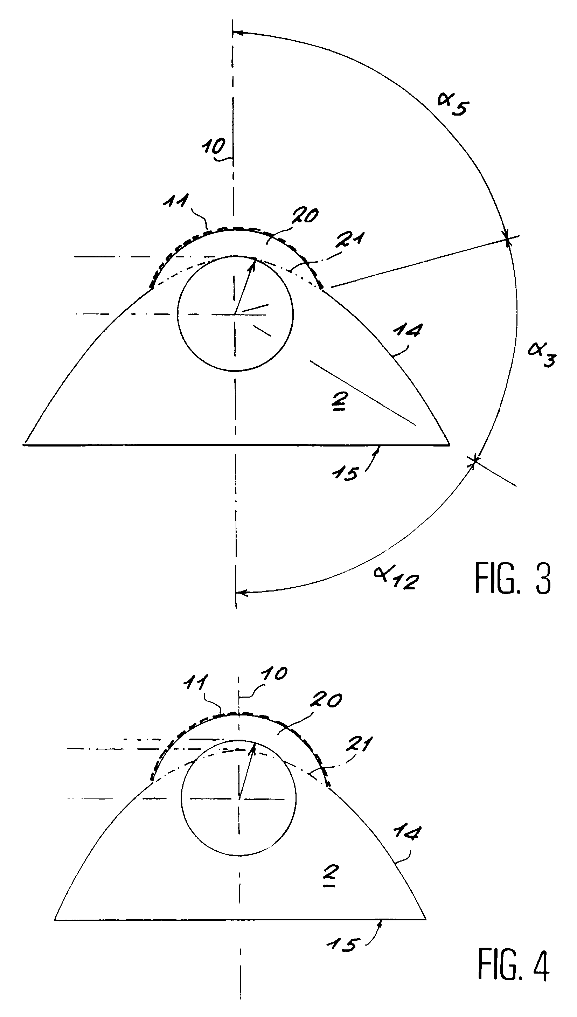

$$d = r \text{ (figure 3)}$$

$$d < r \text{ (figure 4).}$$

Selon le mode de réalisation de l'invention de la figure 1, la surface 7 est entièrement parabolique. Elle est recouverte, par exemple par pulvérisation cathodique sous vide ou tout autre moyen connu de l'homme du métier permettant l'adhésion sur le quartz, d'une pellicule 11 (en trait interrompu sur la figure 1) de matériau réfléchissant les ultraviolets (U.V.) émis, par exemple d'une couche métallique d'aluminium d'épaisseur de l'ordre du micron, pour des U.V. de longueur d'onde de 100 nm à 1 micron, par exemple de 360 nm.

Le tube 2 se referme de l'autre côté du sommet 9 par rapport à l'alésage 3 par une paroi pleine 12, s'étendant entre les extrémités 13 des ailes latérales 14 formées par les sections de parabole symétriques par rapport au plan axial 10.

La paroi 12 comporte une face externe 15, transparente aux rayonnements, de passage des rayons 16 émis directement ou des rayons réfléchis 17 par la parabole.

On rappelle ici, pour mémoire :

- que l'énergie rayonnante (totale ou quasi totale) qui irradie à partir du foyer 8 de la courbe parabolique, ou comme on le verra ci-après elliptique, ou encore combinée "arc de cercle et parabole" ou combinée "arc de cercle et ellipse", est constituée par la somme de deux énergies rayonnantes : l'énergie rayonnante primaire, qui irradie directement dans un espace conique fermé 18 (en trait mixte sur la figure 1) et dont les limites sont les extrémités 13 des ailes latérales du réflecteur,
  et l'énergie rayonnante secondaire, qui irradie dans un espace conique ouvert sur la courbe de réflexion du réflecteur pour y être réfléchie et revenir au mieux perpendiculaire (flèche 17) au produit situé dans le plan irradié 19 (cas de la parabole) ou perpendiculaire aux tangentes au produit courbe à traiter par irradiation ( voir ci-après le cas de l'ellipse),
- que le rendement énergétique d'un rayon ultraviolet dépend de la distance qu'il parcourt de son point d'émission à son point de réception; en raccourcissant cette distance du point d'émission au plan de réflexion (courbe parabolique ou elliptique) d'une part, et du plan de réflexion au produit irradié d'autre part, l'invention optimise donc le rendement,

- que les sources dont la luminance est indépendante de la direction obéissent à la loi de Lambert,
- qu'une meilleure pénétration dépend d'une forte densité de puissance.

L'intensité rayonnée dans une direction quelconque est alors égale au produit de l'intensité rayonnée dans la direction de la normale à la surface rayonnée par le cosinus de l'angle que fait cette direction avec la normale.

La face 15 des figures 1 à 4 est donc plane et perpendiculaire au plan axial 10.

Dans les modes de réalisation plus particulièrement décrits ici, le dispositif émetteur/réflecteur est une entité monobloc, en matériau de verre quartz extrudé, de très haute qualité de transparence dans la bande passante de 180 nm à 2 000 nm et avec un très bas niveau de fluorescence, dans lequel sont intimement liés, confondus et indissociables, l'émetteur et son réflecteur de telle sorte que la partie convexe, dont la forme est parabolique ou elliptique, ou présente une autre forme mathématique combinée s'y rapportant, telle que arc de cercle + parabole ou arc de cercle + ellipse, est réalisée pour devenir la surface de réflexion.

L'autre partie, faisant face au produit irradié, est transparente et agencée pour diriger l'intégralité des rayonnements émis vers le produit, de telle manière que la totalité ou l'essentiel des rayonnements, primaires et secondaires, arrivent à flux parallèles ou sensiblement parallèles perpendiculairement au produit irradié, selon la loi de Lambert, dans le cas de la parabole, ou en direction du plan axial 10 vers le second foyer de l'ellipse dans le cas de l'ellipse.

La forme géométrique des surfaces dioptriques, et notamment celle de la portion inférieure de l'alésage, mises en oeuvre et élaborées structurellement dans le cadre des modes de réalisation de l'invention plus particulièrement décrits ici, est conçue en référence au foyer géométrique du dispositif comprenant les tubes selon l'invention, foyer en général confondu avec l'axe de l'alésage, que l'on appellera donc ci-après l'axe focal.

Ainsi tout point lumineux issu de l'axe focal irradie radialement comme représenté ultérieurement sur les figures.

Par contre, on notera que tout point lumineux du faisceau, situé en-dehors de l'axe focal, ne répond que partiellement à ce mode d'irradiation radiale correspondant à la conception des surfaces dioptriques. Seuls les rayonnements issus dans le plan passant par l'axe focal correspondent à cette conception.

Dans le cas de la figure 1, le rayon de courbure R de l'émetteur rectiligne est donc aussi le rayon de courbure du sommet de la courbe parabolique.

On a donc R = r + e', $\underline{r}$ étant, comme on l'a vu, le rayon de l'alésage cylindrique 3, qui définit le disque lumineux de l'émetteur ultraviolet, et $\underline{e'}$ l'épaisseur de la paroi 11 en verre quartz de ce même émetteur variant entre $\underline{e}$ et l'épaisseur maximum de la paroi dans le plan axial correspondant.

Autrement dit, le rayon de courbure de l'émetteur et celui du sommet du réflecteur sont identiques et confondus.

Selon l'invention, ils sont par ailleurs et avantageusement de petite grandeur c'est-à-dire ≤ 15 mm, avantageusement ≤ 10 mm, ou encore ≤ 5 mm, voire ≤ 2 mm, par exemple = 1,5 mm.

En se référant aux figures 2, 3 et 4, le rayon de courbure R peut aussi être le rayon extérieur de l'arc de cercle d'une goulotte 20 en forme de portion de cylindre symétrique par rapport au plan axial 10 et d'axe confondu avec l'axe 4 de l'alésage 3. La goulotte selon l'invention est toujours recouverte sur sa surface externe d'une matière réfléchissante 11 (en trait interrompu sur les figures), par exemple de l'aluminium.

Comme on va le voir le reste des faces externes 14 des ailes paraboliques peut soit être également recouvert d'une matière réfléchissante, soit en être démunie au delà d'un certain angle au centre $\alpha_5$ correspondant à un angle d'incidence limite $\alpha_L$, au quel cas la réflexion des rayons émis par le tube va se faire par réfraction dioptrique, selon un mode de réalisation de l'invention particulièrement avantageux.

L'arc au sommet des courbes paraboliques est quant à lui représenté en trait interrompu 21, (état virtuel), sur les figures 2 à 4.

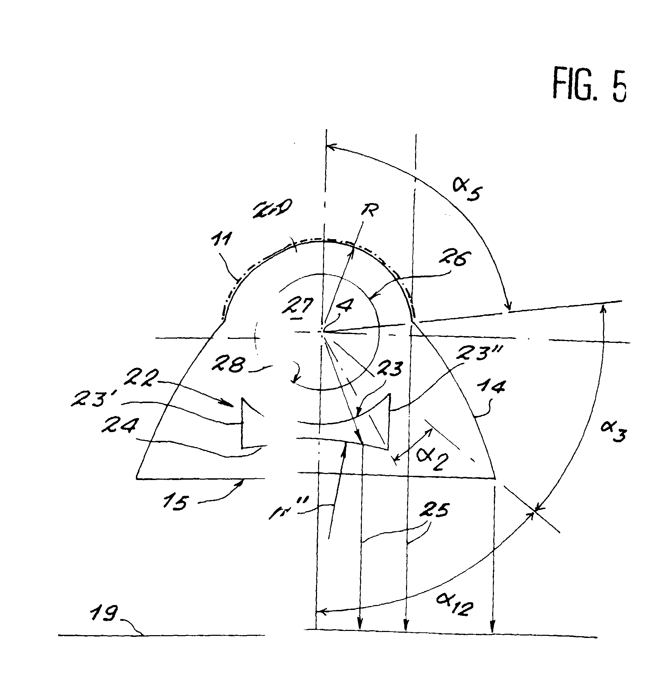

Sur la figure 5, on a représenté un autre mode de réalisation de l'invention comprenant une cavité dioptrique 22 formée par une fente longitudinale comprenant une face supérieure concave 23 en forme de portion cylindrique, d'axe 4 et de rayon externe égal à r + e.

La cavité 22 comprend deux faces latérales 23' et 23" parallèles au plan axial 10, et s'inscrivant dans l'angle $\alpha_2$ définissant le dièdre dans lequel les rayons seraient entièrement réfléchis par la paroi dioptrique 15 en l'absence de cavité.

La cavité comporte également une face inférieure 24 en forme de courbe dont l'équation est déterminée en fonction des lois de l'optique, pour obtenir un faisceau de rayons 25, émis vers le plan 19 de support et de défilement des produits à sécher, aussi parallèles que possible.

En l'espèce, la courbe est une portion de cylindre de rayon R' ≠ R, avec R = r + e.

En cas d'absence d'une goulotte cylindrique partielle (figure 1) ou si l'arc au sommet de cette dernière est inférieure à 2 x $\alpha_5$ les rayons inscrits dans l'angle $\alpha_5$ sont en totalité ou au moins partiellement réfléchis sur la courbe parabolique (cela sera également valable dans le cas d'une courbe elliptique comme on le verra ci-après) et repassent à l'intérieur du disque lumineux, en accusant un angle avec le dioptre circulaire 26 (figure 5) qui est variable en fonction de leur position.

Ils sont alors réfractés dans la surface du disque lumineux 27 ailleurs que sur le foyer d'émission, puis repassent le dioptre circulaire 28 dans l'autre sens selon des angles d'incidence et de réfraction variables, distribuant le rayonnement dans des directions différentes de celles normalement réfléchies par la courbe parabolique (ou plus tard elliptique).

C'est donc pour minimiser la dispersion de ce rayonnement que l'invention propose de remplacer les courbes paraboliques ou elliptiques inscrites dans l'angle $\alpha_5$ (figures 2 à 5 et figures 7 à 18 B) par la goulotte 20 de section en arc de cercle ou goulotte en forme de portion de cylindre dont le centre géométrique est sur le foyer de l'émetteur/réflecteur.

De fait, tous les rayons émis dans l'angle inscrit $\alpha_5$ (qui sera toujours inférieur à 90°) à partir de l'axe de l'alésage, sont alors réfléchis sur le dos de la goulotte cylindrique 20 recouverte du matériau réfléchissant, et se comportent comme une image lumineuse qui a été retournée pour rayonner vers l'avant de l'émetteur/réflecteur à l'intérieur de l'angle inscrit ($\alpha_{12} + \alpha_3$), définissant une image lumineuse inverse, comme si ces mêmes rayons provenaient du foyer ou axe de l'alésage, et n'étaient affectés dans leur valeur énergétique que d'un coefficient de réflexion du matériau réfléchissant appliqué au dos de la goulotte 20.

Ainsi, l'énergie rayonnante secondaire provenant de l'angle inscrit $\alpha_5$ s'ajoute à l'énergie rayonnante primaire inscrite dans l'angle ($\alpha_{12} + \alpha_3$), à l'intérieur duquel les rayons sont tous dirigés vers le plan 19 situé à l'avant de l'émetteur/réflecteur.

A ce niveau, toute l'énergie rayonnante normalement inscrite sur 360° se trouve donc ramenée dans l'angle ($\alpha_{12} + \alpha_3$), et se divise alors en deux parties, à savoir le rayonnement selon l'angle inscrit $\alpha_3$, et le rayonnement inscrit selon l'angle inscrit $\alpha_{12}$.

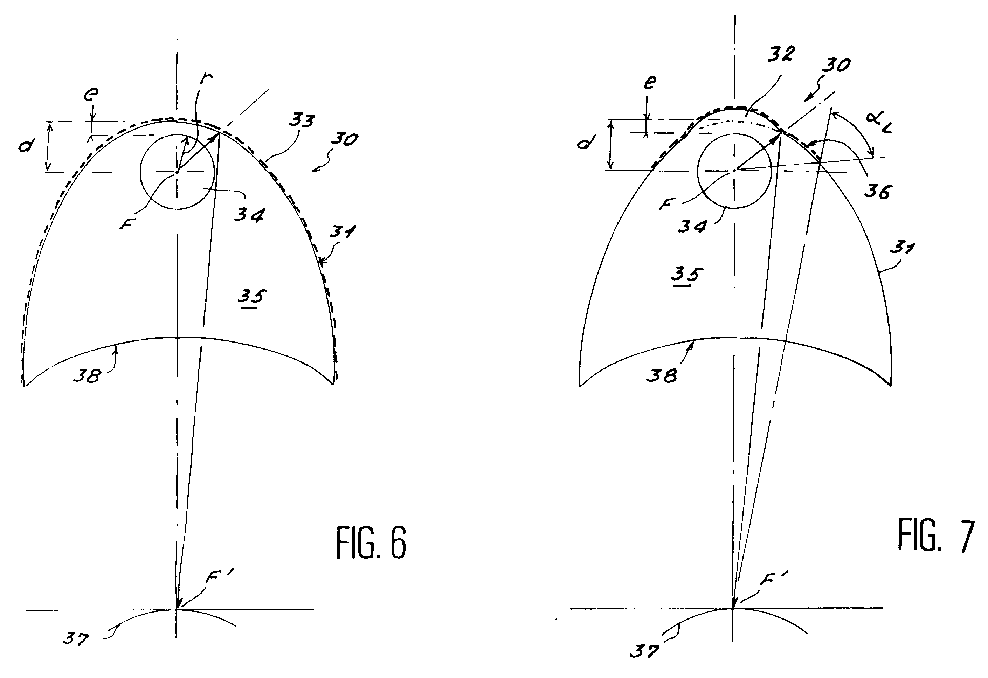

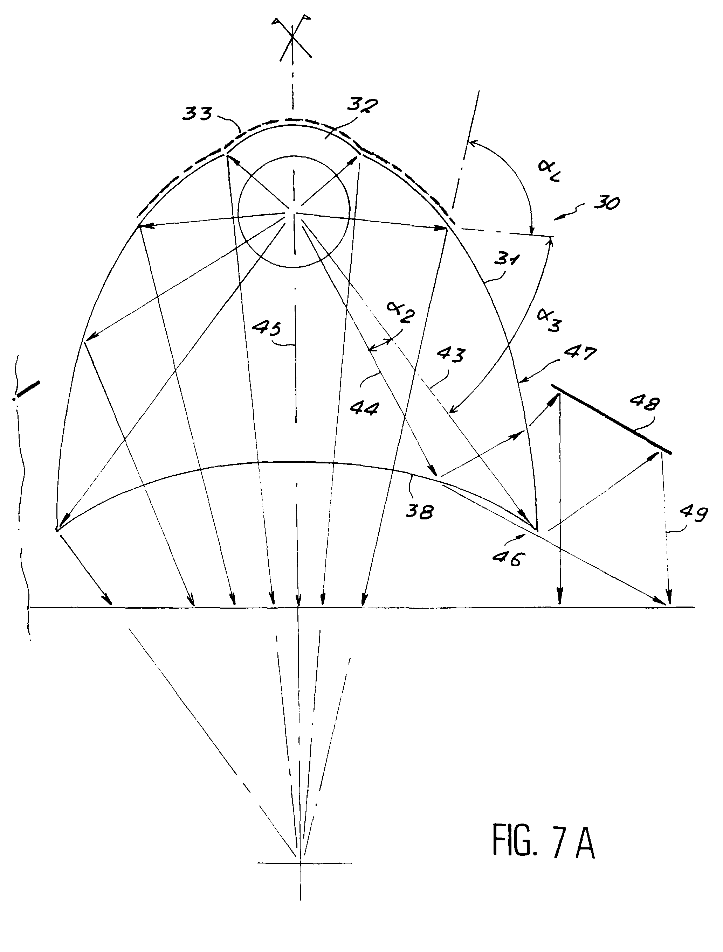

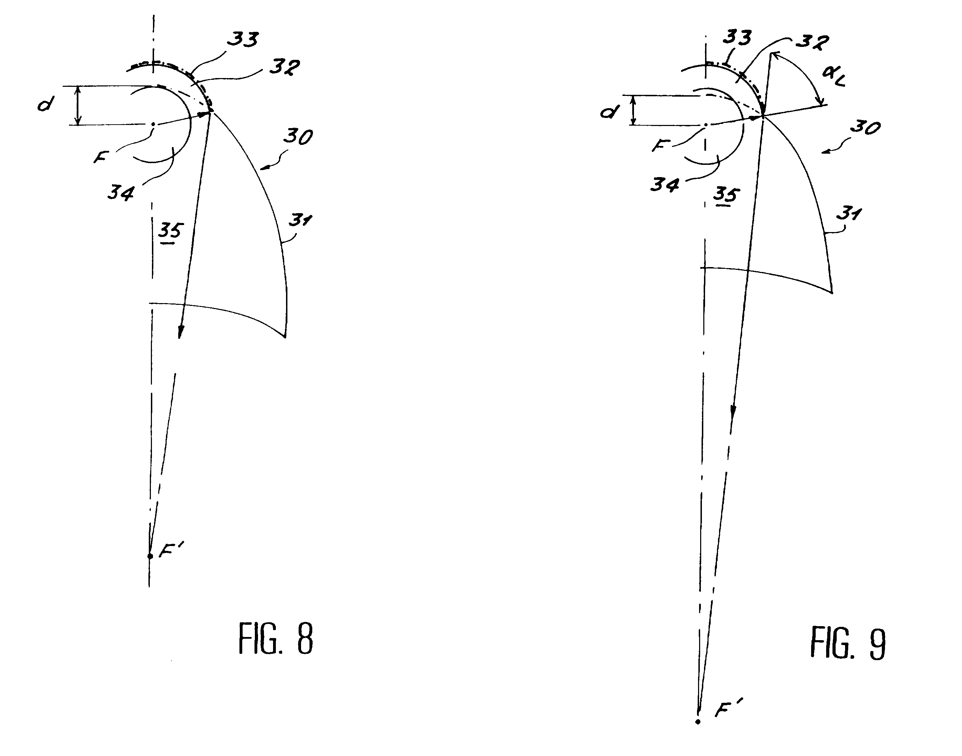

On va maintenant décrire le mode de réalisation du dispositif émetteur/réflecteur selon l'invention correspondant aux figures 6 à 13 présentant une surface réflectrice 31 au moins en partie elliptique, dans lesquels d = r + e (figure 6); r < d < r + e (figures 7 et 7A) ; d = r (figure 8) et d < r (figure 9).

Ici encore le dispositif émetteur/réflecteur est avantageusement pourvu d'une portion de goulotte cylindrique 32, recouverte d'une fine couche 33 de matière réfléchissante (en trait interrompu sur les figures), par exemple en aluminium.

Plus précisément le dispositif 30 comprend un alésage cylindrique 34 et une paroi 35 pleine en verre quartz qui rejoint les ailes 36 de la surface réflectrice de section elliptique ou en forme de portions d'ellipse, par exemple une demi ellipse d'équation :

$$\frac{x^2}{(FF' + 2d)^2} + \frac{y^2}{(FF' + 2d)^2 - \left(\frac{FF'}{2}\right)^2} = 1$$

F et F' désignant les foyers de l'ellipse.

Comme dans le cas de la figure 1, la figure 6 montre une surface réflectrice sans goulotte supérieure, entièrement recouverte d'une couche de matériau métallique réfléchissant qui concentrent les rayons émis par le tube rayonnant vers le second foyer F'. Dans le cas des figures 7, 8 et 9 comme dans le cas des figures 2, 3 et 4, seule la goulotte cylindrique 32, et éventuellement une portion 36 (figure 7) de la surface elliptique directement à proximité de la goulotte avec laquelle elle est jointe, est recouverte de matériau réfléchissant.

La paroi de la goulotte renvoie donc une image rayonnante inverse au foyer F, qui réémet un rayon réfléchi vers les parois elliptiques comme si ce rayon provenait du foyer lui-même, avec la même longueur d'onde que le rayon primaire émis d'énergie E, mais avec une énergie E' < E du fait de l'absorption liée au coefficient de réflexion du matériau réfléchissant déposé au dos de la goulotte.

La paroi 35 est délimitée vers le produit courbe à traiter 37, par une surface 38 de section courbe, agencée pour être perpendiculaire au plus grand nombre de rayons issus de l'intérieur du dispositif, pour éviter de les dévier, de façon connue de l'homme du métier appliquant les lois de l'optique.

Un exemple de calcul de l'angle $\alpha_L$ est donné dans la suite.

Dans les modes de réalisation de l'invention plus particulièrement décrits ici, avec goulotte supérieure réfléchissante d'angle au centre déterminé $\alpha_5$ qui va être précisé ci-après, la partie restante de la surface réflectrice parabolique ou elliptique, n'est pas recouverte de matériau réfléchissant, la réflexion des rayons émis par le disque plasmatique sur cette partie restante, c'est-à-dire dans le cône d'angle $\alpha_3$, se faisant par réfraction dioptrique, du fait des indices de réfraction différents des deux milieux réfringents que sont le quartz et le gaz environnant.

Or, il existe en angle limite $\alpha_L$, qui va dépendre de la longueur d'onde des rayonnements ultraviolets émis et des valeurs précises des indices de réfraction de chacun des milieux, au dessus duquel tout rayon incident qui rencontre la courbe de réflexion dioptrique 14 ou 31 est intégralement réfléchi.

Cet angle limite $\alpha_L$ permet de déterminer l'angle au centre $\alpha_5$ mentionné ci-avant de la goulotte ou portion de cylindre 20 ou 32 de façon à optimiser le dispositif pour que la réflexion dioptrique soit utilisée à son maximum.

En effet, il n'y a alors aucune perte d'énergie du rayonnement secondaire émis par rapport au rayonnement primaire, ce qui présente un avantage important.

Ainsi, la réflexion dioptrique restitue intégralement l'énergie des longueurs d'onde inférieures à 250 nanomètres, qui sont souvent absorbées complètement par les photoinitiateurs utilisés sur les produits à sécher.

Optimiser la restitution de l'énergie de ces longueurs d'onde accélère donc par exemple considérablement le processus de polymérisation de l'encre traitée, et donc la vitesse de séchage et ce dans des facteurs bien supérieurs au simple rapport des énergies.

Par contre, la réflexion par surface réfléchissante en général en aluminium, qui absorbe justement l'énergie des longueurs d'onde inférieures à 250 nanomètres, est moins favorable, bien que non exclue par l'invention.

L'invention propose donc un dispositif émetteur/réflecteur dont :

- la forme en portion de cylindre de la goulotte et celle des surfaces réflectrices paraboliques ou elliptiques des ailes,
- les indices de réfringence du quartz et du gaz environnant utilisés,
- et le matériau réfléchissant utilisé

sont agencés pour permettre de confondre dans un même flux homogène, unifié et maîtrisé, la totalité ou sensiblement la totalité des rayons de longueur d'onde et d'énergie déterminée, en fonction du traitement recherché définissant les paramètres photochimiques à retenir pour dimensionner ledit dispositif, dans une direction sensiblement unique, vers le produit à traiter.

Dans le cas d'un dispositif émetteur/réflecteur parabolique, les rayons primaires et secondaires doivent être perpendiculaires au plan irradié, avec un cosinus égal à 1 selon Lambert.

Dans le cas d'un dispositif émetteur/réflecteur elliptique, les rayons sont dirigés vers le foyer F' de l'ellipse.

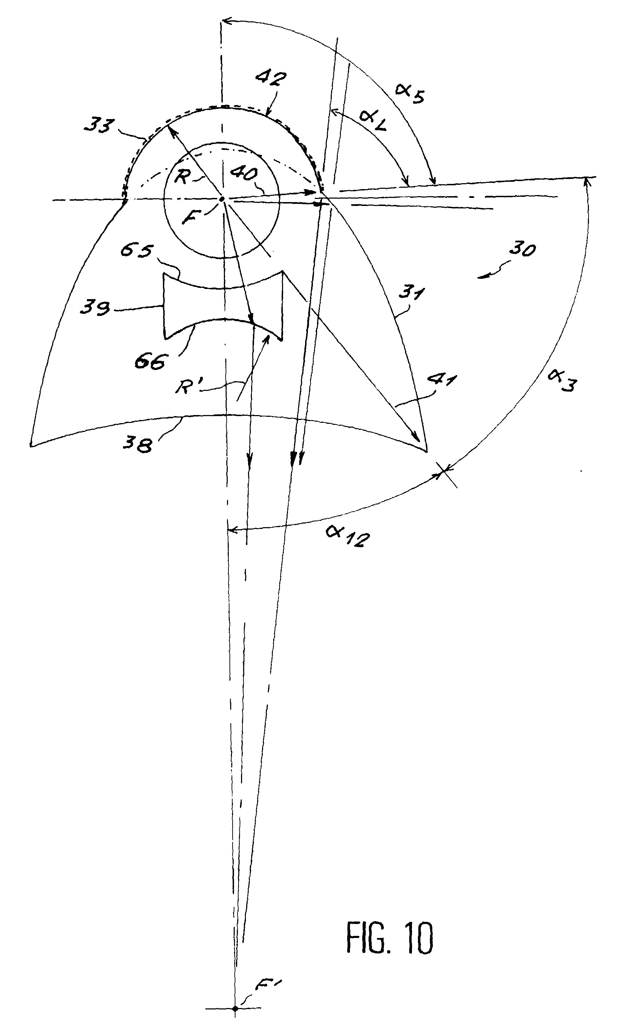

L'invention propose également (figure 10, à comparer à la figure 5) un dispositif du type de la figure 9 comprenant une cavité dioptrique 39 améliorant encore l'équilibre optique du disque lumineux, avec une forme calculée de façon semblable à la cavité 22 de la figure 5.

Plus précisément, le comportement des rayons lumineux dans le cadre du dispositif de la figure 10 va maintenant être détaillé.

Celui-ci présente une combinaison agencée pour que toute l'énergie rayonnante se trouve ramenée dans l'angle $\alpha_{12} + \alpha_3$, comme déjà vu en référence à la figure 5.

La face 31, inscrite dans l'angle $\alpha_3$, reçoit alors tous les rayonnements compris entre les limites des rayons 40 et 41.

Ces rayonnements lumineux véhiculent leur énergie dans un milieu réfringent qui est le quartz, dont la valeur de l'indice de réfraction dépend de la longueur d'onde qui le traverse.

Ils rencontrent ensuite une surface courbe dioptrique dont le deuxième milieu réfringent est de l'air ou un gaz (par exemple un gaz neutre).

Ainsi, après avoir fait le choix sur la ou les longueurs d'onde à utiliser et après avoir déterminé le gaz constituant le deuxième milieu, l'angle d'incidence limite $\alpha_L$ (tel que tout rayon incident qui rencontre la surface courbe de réflexion dioptrique 31 est intégralement réfléchi) est calculé, et l'angle au centre $\alpha_5$ d'axe confondu avec l'axe de l'alésage en est déduit en fonction de l'équation de la surface réflectrice et des lois de l'optique.

Un exemple de calcul de l'angle $\alpha_L$ est donné dans la suite.

De même, en référence à la figure 5, en construisant la courbe de la parabole comme celle de l'ellipse, et comme on l'a vu, il existe une construction mathématique des courbes telle que l'angle d'incidence limite $\alpha_L$ soit le point de rencontre de la courbe 20 ou 42 en tant qu'arc de cercle avec la courbe 14 ou 31 en tant que parabole ou ellipse.

Ici encore la performance acquise est alors remarquable sachant que :

- la vitesse de polymérisation d'une encre ou d'un vernis est étroitement liée à la réactivité de ces photoinitiateurs utilisés dans ce produit,
- l'influence sur les photoinitiateurs est essentiellement due aux énergies portées par des longueurs d'onde inférieures à 250 nanomètres,
- le coefficient de réflexion métallique pour un aluminium traité pour être un réflecteur ultraviolet est d'environ 0,4 pour des longueurs d'onde comprises entre 180 et 270 nanomètres, et d'environ 0,85 dans le spectre du mercure, c'est-à-dire 360 nanomètres.

Il faut donc pour un même niveau de réactivité, trois fois plus de puissance pour un émetteur connu de l'art antérieur, dit "sans ozone", que pour un émetteur dit "avec ozone",

En revanche, quelles que soient les longueurs d'onde émises, le coefficient de réflexion sur une surface dioptrique est toujours égale à l'unité dans le sens de propagation d'un rayon se déplaçant du milieu transparent solide à la frontière du milieu transparent gazeux.

Dans les modes de réalisation plus particulièrement décrits, le dos des courbes paraboliques ou elliptiques en dessous de $\alpha_L$ n'étant pas recouvert d'un enduit de réflexion, on bénéficie ainsi de cet avantage.

La figure 7 A montre un mode de réalisation de l'invention améliorant encore les performances du dispositif selon l'invention utilisant la réflexion dioptrique.

On remarque en effet que, pour tous les rayons inscrits dans l'angle $\alpha_2$, la courbe 38 fonctionne comme la courbe 31.

En effet, les rayons selon $\alpha_2$, entre le rayon 43 et les rayons 44, arrivent sur la courbe 38 avec un angle d'incidence supérieur à l'angle limite des deux milieux réfringents.

La réflexion est donc totale, le coefficient de réflexion étant égal à 1.

Au-delà de cet angle $\alpha_2$, dans la direction de l'axe 45 de l'ellipse par exemple, le rayon 46 part en oblique vers l'extérieur.

Mais dans le cas de la réflexion totale, l'énergie rayonnante est alors renvoyée intégralement sur la portion de courbe constituée par les ailes parabolique 14 ou elliptique (plus particulièrement décrit ici) pour donner la surface réflectrice 31, là où un nouvel angle d'incidence est voisin de 0.

On constate alors la situation suivante : la portion de courbe 47 fonctionne en réflexion pour tous les rayons émis dans l'angle $\alpha_3$ et, simultanément, en transparence pour tous les rayons émis dans l'angle $\alpha_2$.

Les rayons émis dans l'angle $\alpha_2$, sortent par transparence de l'émetteur/réflecteur dans la portion de courbe 47 et sont alors renvoyés par des obstacles de réflexion 48 par exemple métallique, en forme de plaques longitudinales inclinées, plane ou courbe, selon les directions que l'on souhaite donner aux rayons réfléchis 49.

De même l'utilisation d'une cavité dioptrique peut être ou non combinée avec les obstacles de réflexion 48.

Il va de soi que les remarques et éléments complémentaires ci-dessus sont également applicables à la construction parabolique.

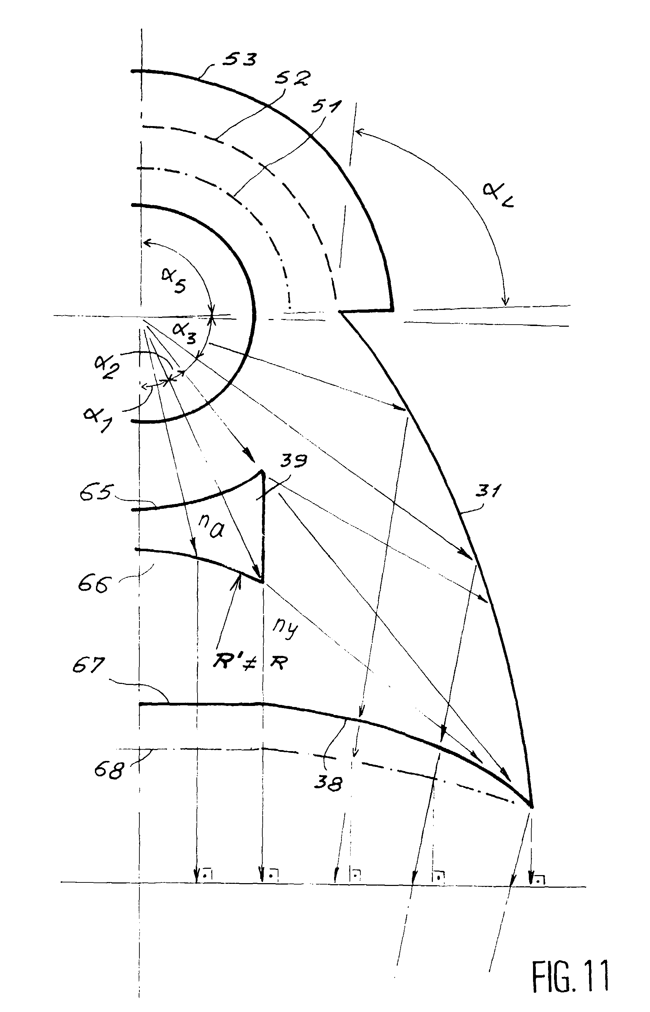

On a représenté sur la figure 11 un autre mode de réalisation d'un dispositif selon l'invention avec goulotte en forme de portion cylindrique d'épaisseur e différente, à savoir : avec e < R, où R est le rayon externe du cylindre d'alésage, comme indiqué en trait mixte 51, avec e = R en trait interrompu 52 et avec e > R, par exemple e = 2R, en trait plein 53.

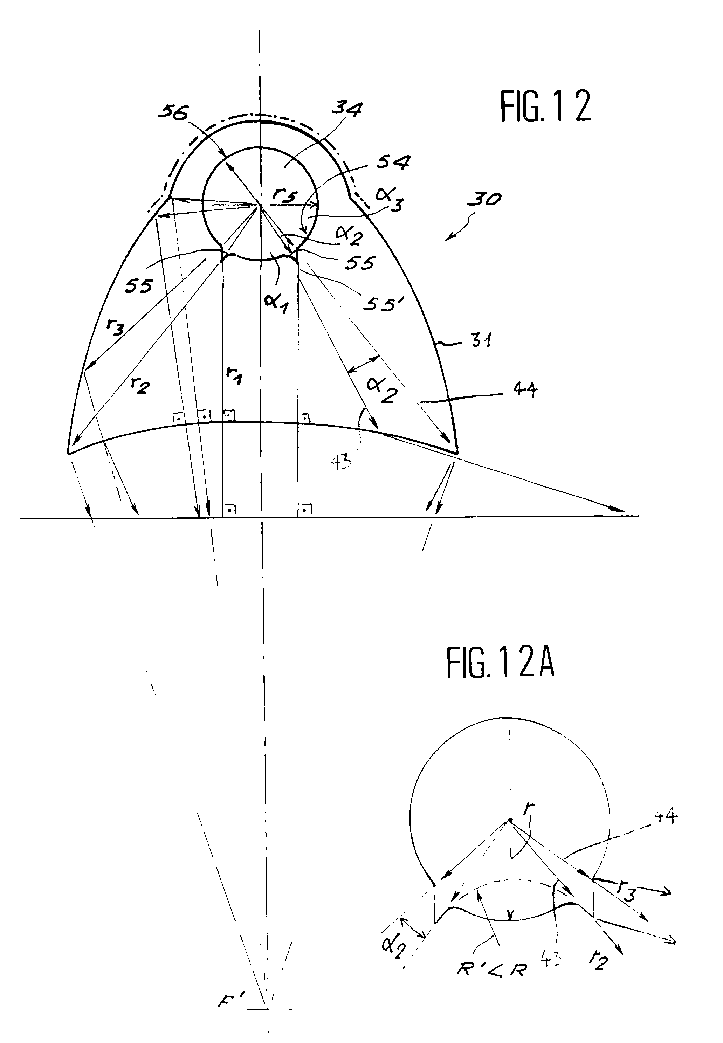

La figure 12 montre un dispositif 30 dont l'alésage 34 comprend une face interne 54 munie de deux rainures 55 longitudinales de section sensiblement en forme de triangle de hauteur par exemple ≤ 1/5 du diamètre de l'alésage, par exemple égale au 1/10ème s'inscrivant dans l'angle $\alpha_2$, dont le côté externe 55' est parallèle au plan axial.

Les rayons 43 et 44 délimitant cet angle $\alpha_2$, et la courbe des rainures 55 définit ainsi une portion d'énergie qui irradie d'un côté le premier dioptre circulaire 56 constitué par le disque lumineux ultraviolet (premier milieu réfringent avec n = 1) sur le verre quartz (deuxième milieu réfringent avec n ≅ 1,5) et est dévié de l'autre côté par les faces latérales des rainures vers les parois latérales 31.

Plus précisément les rainures 55 comportent, chacune, une face latérale parallèle au plan axial 10 et s'inscrivant dans l'angle $\alpha_2$ définissant le dièdre dans lequel les rayons sont entièrement déviés par réfraction sur les courbes de réflexion dioptrique 14 pour le dispositif de courbe parabolique et 31 pour le dispositif de courbe elliptique (figure 12)

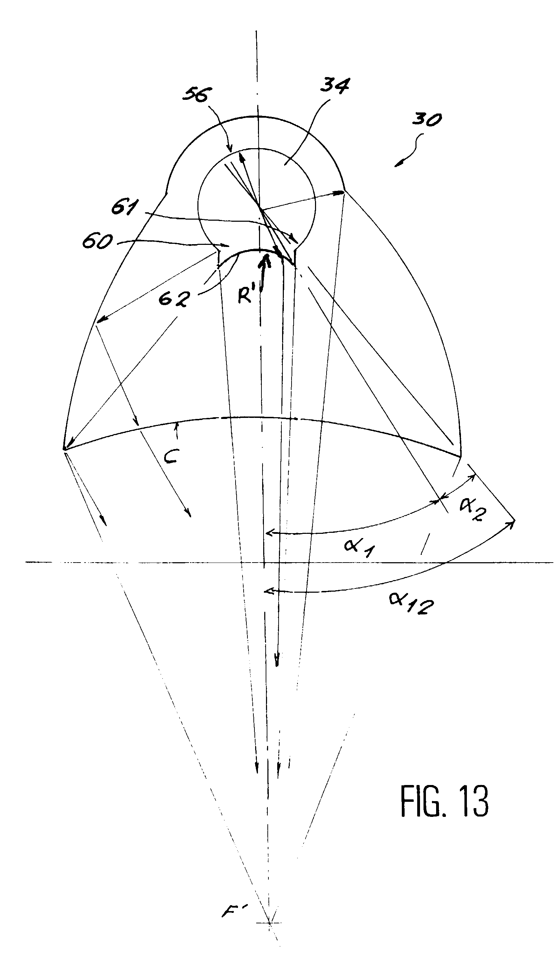

La figure 13 montre une variante du dispositif 30, comportant un alésage muni d'une partie inférieure partiellement évidée 60 formant un bossage convexe 62 sur la face interne inférieure 61 correspondant aux angles $\alpha_{12}$ et dont le rayon de courbure R' est différent de R de telle manière que les rayons réfractés sur la courbe dioptrique 62 soient alors par exemple convergents.

La totalité de rayonnement inscrit dans l'angle $\alpha_1 + \alpha_2 = \alpha_{12}$, qui définit une portion d'énergie irradiant le premier dioptre 56, définit également la portion de courbe 62, de l'évidement 60, de telle manière que tous les rayons primaires réfractés soient réorientés soit pour être dirigés au foyer virtuel F' dans le cas le l'ellipse, soit pour être dirigés perpendiculairement au plan à irradier, dans le cas de la parabole.

La totalité des rayonnements inscrits dans l'angle $\alpha_2$ définit une portion d'énergie irradiant le premier dioptre vertical et parallèle à l'axe de l'évidement 60, de telle manière que tous les rayons primaires réfractés soient réorientés pour être dirigés sur les courbes de réflexion dioptrique 14 pour la parabole, 31 pour l'ellipse, où ils prennent sensiblement, à la réflexion sur ladite courbe dioptrique, le même chemin que les rayons réfléchis issus de l'angle $\alpha_3$.

Ainsi, contrairement aux dispositifs connus où sont physiquement séparés l'émetteur et le réflecteur et pour lesquels se distinguent deux sortes de rayonnements dirigés, qui sont le rayonnement primaire et le rayonnement secondaire, l'invention propose un dispositif qui permet de confondre dans un même flux homogène, unifié et maîtrisé, la totalité du rayonnement primaire et du rayonnement secondaire dans des directions sensiblement uniques et identiques.

On recherche avantageusement une forme de la section lumineuse du faisceau telle que la demi section lumineuse située du côté de l'angle $\alpha_5$ soit égale ou sensiblement égale à la demi section lumineuse située du côté des angles $\alpha_1$, $\alpha_2$ et $\alpha_3$.

Comme on l'a vu (figures 5 ou 10) il est également possible de modifier la courbe dioptrique 15 ou 38, pour réorienter le rayonnement de telle sorte que les rayons réfractés issus de la courbe de transparence dioptrique corrigée, soient encore plus parallèles entre eux et perpendiculaires au plan irradié selon Lambert, ou au contraire soient réorientés de manière à obtenir un flux rayonnant convergent vers un foyer virtuel F', ou, à l'inverse, un flux rayonnant divergent, par ajout d'une cavité dioptrique 22 ou 39, de façon à la portée de l'homme du métier.

La courbe circulaire dioptrique 65 est le prolongement géométrique de la courbe circulaire de réflexion métallique 11 ou 42, de telle sorte que (cf. plus précisément figure 11) tout rayon qui part du foyer (comme tout rayon lumineux sur cette même trajectoire) passe par la première courbe circulaire dioptrique 65 et la seconde courbe circulaire dioptrique 66 en étant dévié vers le foyer virtuel situé dans le plan axial.

Tous ces rayons arrivent sur la face 15 ou 38 dans les limites de l'angle inscrit $\alpha_1$ de telle manière que les rayons primaires arrivent tous perpendiculaires au second dioptre 67 (figure 11).

Dans le cas de l'ellipse, il est possible de modifier encore la courbe de transparence dioptrique (trait mixte 68 sur la figure 11), pour réorienter les rayons secondaires issus de $\alpha_2$ et ceux issus de $\alpha_3$ de telle manière que tous les rayons réfractés sur la courbe de transparence dioptrique corrigée 68 reconstituent un flux rayonnant parallèle et perpendiculaire au plan irradié avec un cosinus égal à 1 selon Lambert.

Il est également possible, de façon à la portée de l'homme du métier utilisant les lois de l'optique, de modifier la courbe de transparence dioptrique 15 d'un émetteur/réflecteur parabolique (figure 5) pour réorienter tous les rayons réfractés sur une courbe de transparence dioptrique corrigée (non représentée) par exemple reconstituant un flux rayonnant convergent vers un foyer virtuel F' ou un flux rayonnant divergent.

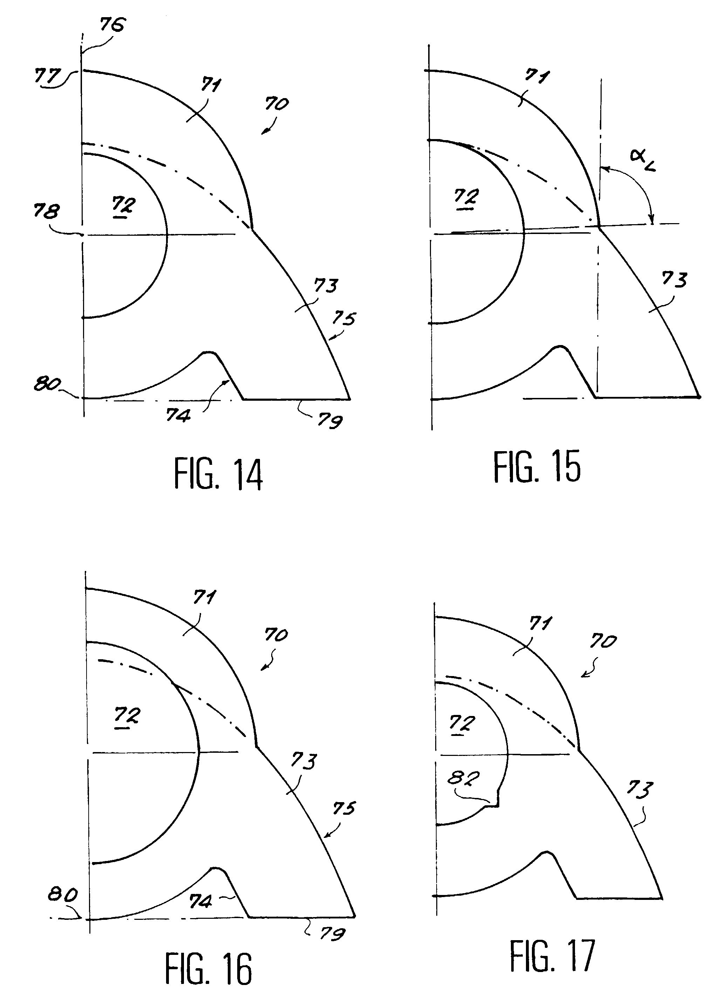

L'invention propose également (figures 14 à 18 B) un dispositif 70 comprenant un tube cylindrique 71 percé de bout en bout d'un alésage 72 cylindrique.

Le tube est muni de deux pattes 73 latérales longitudinales de surface interne 74 et externe 75 présentant des sections en forme de portions de paraboles parallèles, la face externe 75 constituant la portion de surface réflectrice parabolique de l'aile selon l'invention .

Les pattes sont de largeur par exemple égale au rayon de l'alésage.

Elles sont symétriques par rapport au plan axial 76 passant par la génératrice au sommet 77 et le foyer 78 confondu avec l'axe de l'alésage 72.

La face inférieure 79 des pattes pour la forme parabolique, est perpendiculaire au plan 78 et située dans un plan 80 (en trait mixte sur les figures) tangent à la portion de cylindre inférieure du tube 71 par exemple d'épaisseur égale à la moitié de rayon de l'alésage.

La partie supérieure du tube constitue, comme décrit précédemment en référence aux figures 2 à 4, une goulotte supérieure 81, l'arc au sommet de la parabole étant entièrement compris dans l'épaisseur de la paroi cylindrique (r < d < r + e) (figure 14), étant tangent à l'alésage 72 (d = r)(figure 15) ou étant sécant à l'alésage (d < r)(figure 16).

Dans les modes de réalisation de l'invention plus particulièrement décrit ici, e = r et la distance entre les extrémités des pattes 73 est égale à 7,4r.

De même, et comme précédemment décrit, l'alésage peut comprendre des rainures 82 longitudinales de section triangulaire isocèle ou équilatérale pour redistribuer les rayonnements de l'angle $\alpha_2$, soit vers l'intérieur en rayonnements primaires, soit vers l'extérieur en rayonnements secondaires par réflexion dioptrique ou métallique (figure 17), par exemple de hauteur égale à de l'ordre de 1/10ème du rayon de l'alésage.

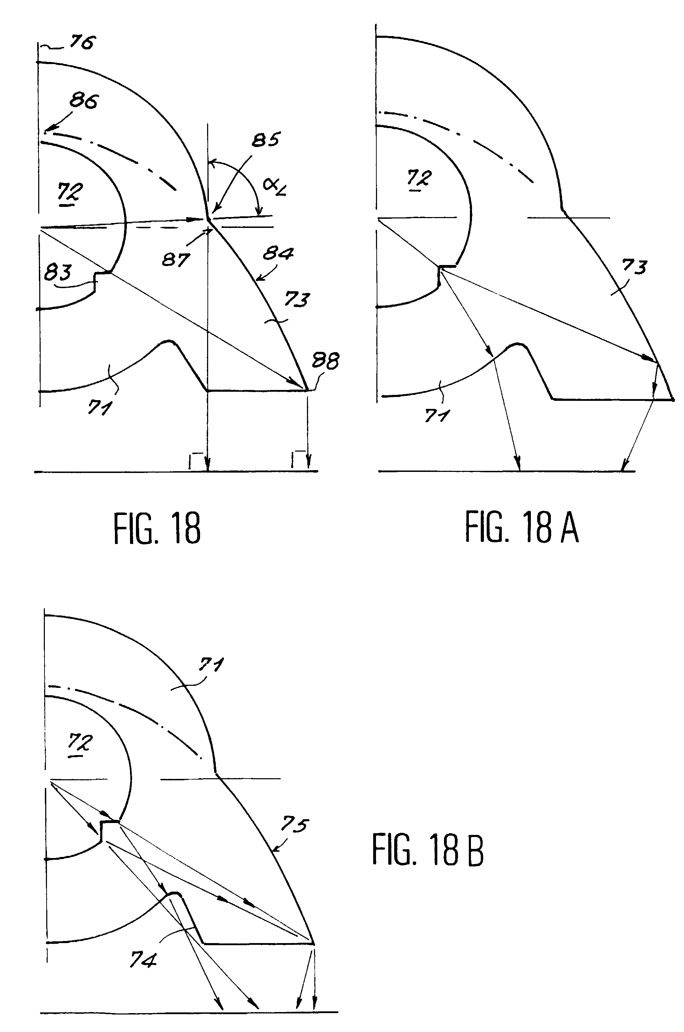

Dans le mode de réalisation des figures 18, 18 A et 18 B, il est par contre prévu un ergot longitudinal 83 de section triangulaire rectangle, dont la paroi latérale externe est parallèle au plan axial 76, qui permet d'améliorer encore le recentrage des rayons vers le plan axial 76, ou parallèlement audit plan axial 76, en jouant sur les lois de l'optique.

A titre d'exemple, et en référence à la figure 18, il est donné ci-après le calcul permettant la construction de la parabole de la surface réflectrice 84, pour un rayon du disque lumineux r = 2 mm, une épaisseur du verre quartz e = 2 mm et un indice de réfraction en fonction de la longueur d'onde utilisée.

On voit que pour $\lambda$ = 200 nm, $n_{200}$ = 1,551

$$\sin\alpha_{200} = \frac{1}{n_{200}} = \frac{1}{1,551} = 0,6447, \ \alpha_{200} = 40,14°$$

et pour $\lambda$ = 360 nm, $n_{360}$ = 1,475

$$\sin \alpha_{360} = \frac{1}{n_2} = \frac{1}{1,475} = 0,6779, \ \alpha_{360} = 42,68°$$

On prendra donc pour les calculs $\alpha_L$ = 42° comme angle limite à la réflexion pour des longueurs d'onde $\lambda \leq 360$ nm. La tangente à la courbe parabolique étant tg $\frac{\alpha_L}{2}$ = tg42° = 0,9, c'est également la dérivée de l'équation de la parabole : y' = 0,9. En effet posons l'équation de la parabole

$$y = \frac{1}{a}x^2$$

Il vient :

$$y + \Delta y = \frac{1}{a} (x + \Delta x)^2 = \frac{1}{a} (x^2 + 2 x \Delta x + \Delta x^2)$$

$$\Delta y = \frac{1}{a} (x^2 + 2 x \Delta x + \Delta x^2) - y$$

$$= \frac{1}{a} (x^2 + 2 x \Delta x + \Delta x^2) - \frac{1}{a} x^2$$

$$= \frac{1}{a} (2 x \Delta x + 2 \Delta x^2)$$

Il vient donc

$$y' = \frac{2}{a} x = tg \frac{\alpha L}{2}$$

Selon la définition donnée ci-avant R = r + e = 4 mm

$$\sin 84° = \frac{x_T}{R}$$

On peut alors calculer les coordonnées au point T, soit :

$$x_T = R \sin 84°$$

$$= 4 \times 0,9945 = 3,978 \text{ mm}$$

Pour le coefficient "a" de la parabole il vient

$$y' = \frac{2}{a} x = tg\frac{\alpha_L}{2}$$

au point T
et

$$a = \frac{2}{tg\alpha \frac{L}{2}} x$$

avec $x_T$ = 3,978 mm

$$a = 8,83$$

$$tg42° = tg \frac{\alpha_L}{2} = 0,9004$$

L'équation de la parabole est donc de la forme

$$y = \frac{1}{8,836} x^2$$

Les points significatifs de la courbe sont alors :

- le point 85 $(x_T;y_T)$ de la tangente dioptrique, avec $x_T$ = 3,978 mm $\Rightarrow$ alors $y_T$ = 1,7909 mm
- le point 86 $(x_f = 0;y_f)$ de la génératrice au sommet La distance du foyer de la parabole au sommet de celle-ci (donc pour x = 0) étant y= $\frac{a}{4}$ avec $x_f$ = 0 . Il vient donc $y_f$ = 2,209 mm
- le point 87 $(x_1;y_1)$, d'intersection du plan axial 88 avec la parabole avec $y_1$ = 2,209 mm, d'où $x_1$ = 4,418 mm
- le point 88 $(x_2;y_2)$ d'extrémité de la patte 73 avec $y_2$ = (2,209 + 4) = 6,209 mm alors $x_2$ = 7,4 mm

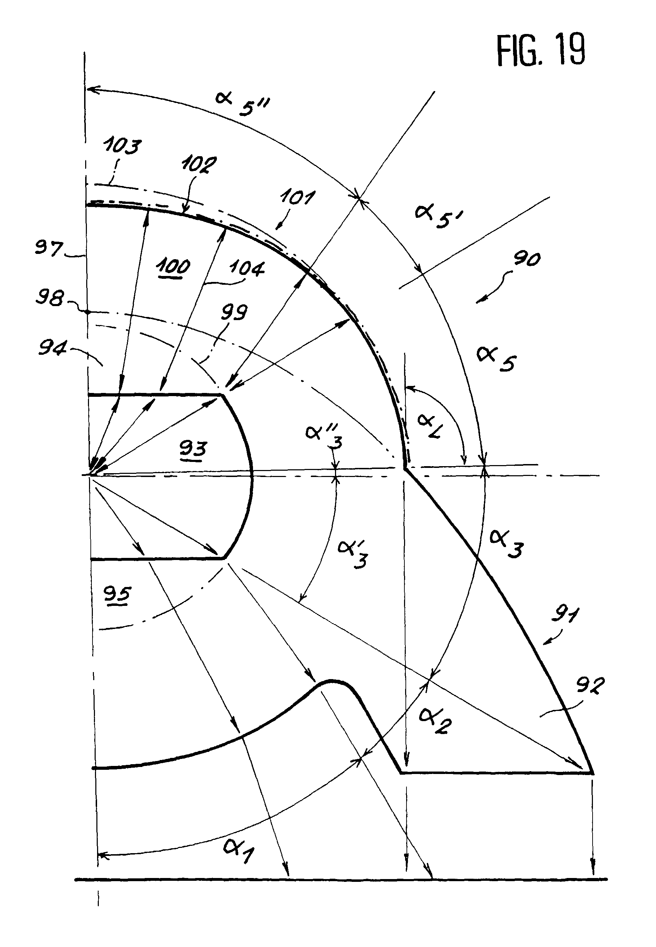

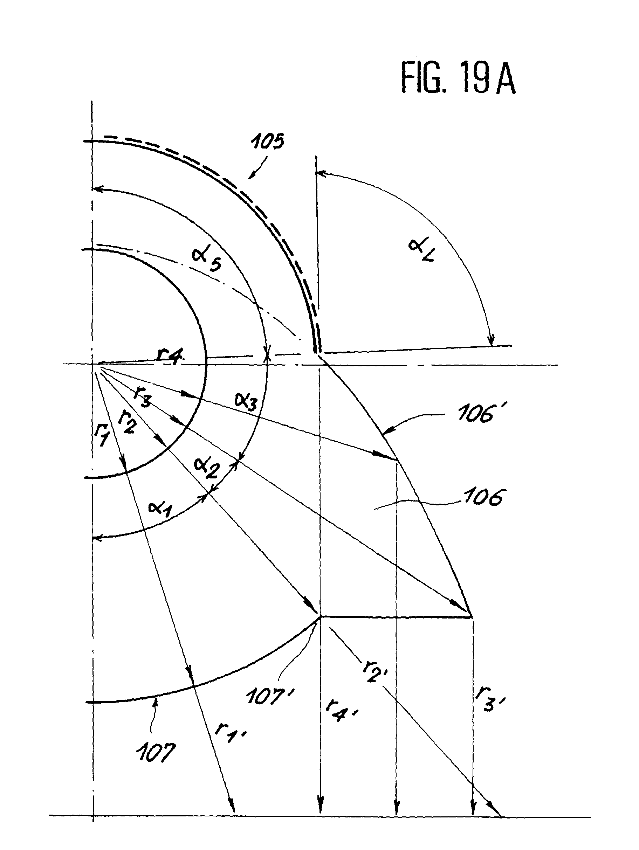

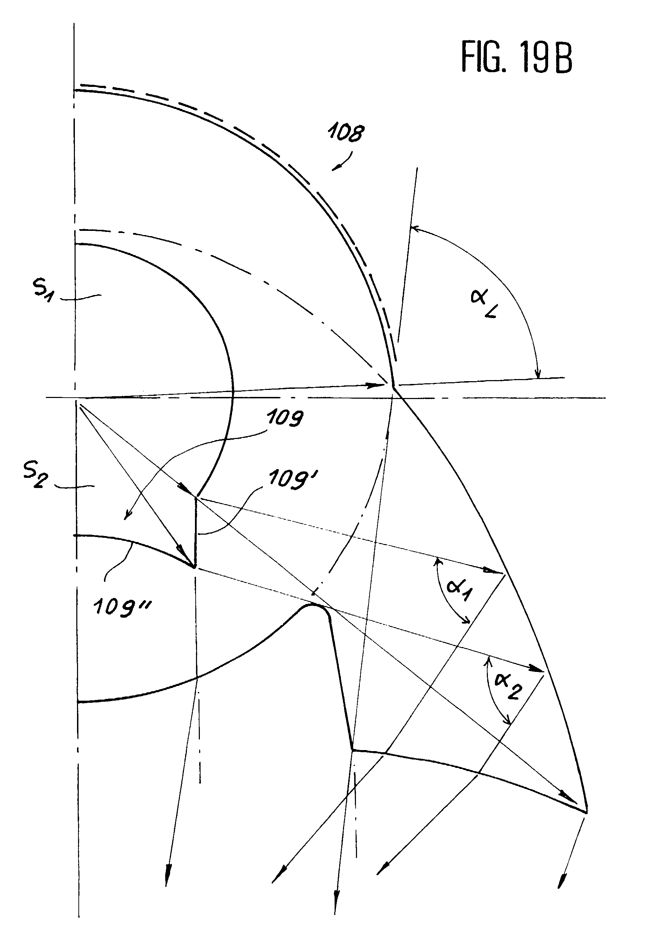

La figure 19 montre un dispositif 90 à surface réflectrice parabolique 91 du type à pattes latérales 92 comme décrit en référence aux figures précédentes.

La section de l'alésage 93 n'est cette fois-ci plus circulaire mais en forme de cercle tronqué dont les parties hautes 94 et basses 95, de section en forme de demi lune sont conservées pleines, en verre, symétriquement par rapport au plan 96 perpendiculaire au plan axial 97 contenant la génératrice au sommet 98 de la parabole.

Il a été observé qu'une telle disposition permettait d'augmenter considérablement le rendement, dans le rapport du changement des sections lumineuses, par rapport à une section circulaire 99 (en trait mixte sur la figure 19), selon une loi du type

$$\eta = f\left(\frac{S_2}{S_1}\right)^2$$

avec $S_2$ section du cercle et $S_1$ section de cercle tronqué.

Dans ce mode de réalisation l'angle $\alpha_3 = \alpha'_3 + \alpha_3''$ est tel que (pour les valeurs de rayon et d'épaisseur prise ci-avant en référence à la figure 18)

$$\cos \alpha''_3 = \frac{3,978}{4} = 0,9945 \Rightarrow \alpha''_3 \cong 6°$$

$$\text{tg } \alpha'_3 = \frac{7,4 - 2,209}{6,209} = 0,836 \Rightarrow \alpha'_3 \cong 40°$$

soit $\alpha_3 = 46°$

Pour rétablir l'équilibre de la répartition des rayons réfléchis vers le haut, la paroi 100 de la goulotte 101 du dispositif 90 présente une surface 102 aplatie par rapport à celle d'une goulotte cylindrique 103 (en trait mixte sur la figure).

Son équation se calcule de façon à permettre un retour des rayons émis 104 à partir de l'alésage 93, de façon exactement inverse, les rayons incidents devant donc frapper la surface réfléchissante 102 perpendiculairement.

La figure 19 A montre un autre dispositif 105 monobloc à alésage cylindrique comprenant deux pattes 106 à surface parabolique 106'. La face inférieure 107 est cylindrique, d'axe confondu avec l'axe de l'alésage, et rejoint les extrémités internes 107' des pattes.

La figure 19 B montre un dispositif 108 monobloc du type décrit ci-avant avec pattes et alésage cylindrique, comprenant sur sa paroi interne inférieure un évidement 109 muni de faces latérales 109' parallèles au plan axial et d'une face inférieure 109" cylindrique, de rayon égal au rayon externe de la calotte.

Ici, les pattes sont à surface elliptique, la face inférieure des pattes étant en portion de cylindre.

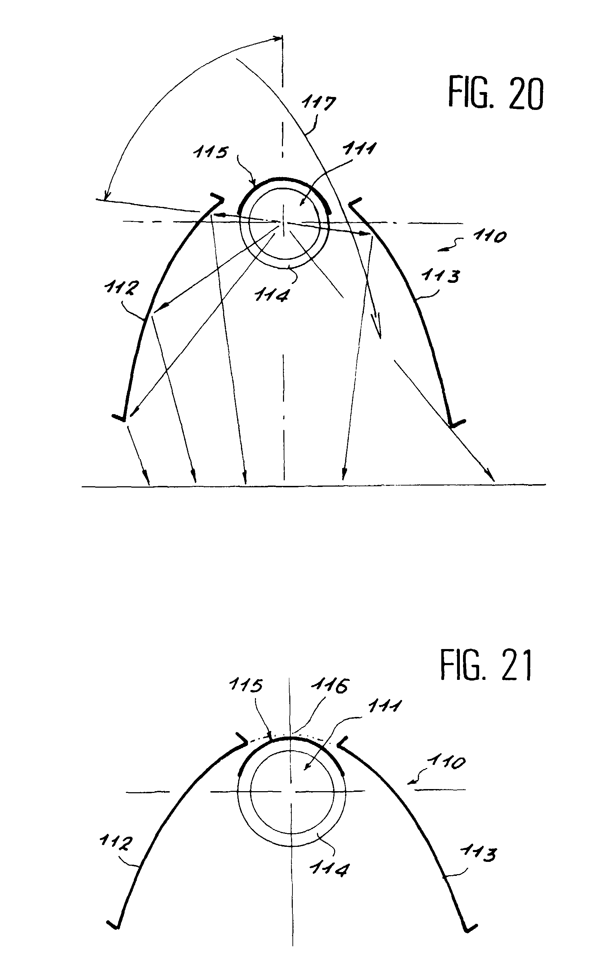

On a représenté sur les figures 20 à 25 un autre mode de réalisation d'un dispositif 110 selon l'invention comprenant un tube émetteur 111 en quartz tubulaire, séparé de ses ailes réflectrices 112 et 113 en matériau métallique de réflexion.

Le couple émetteur/réflecteur procède néanmoins de la même disposition géométrique que les dispositifs émetteur/réflecteur décrits ci-avant, où réflecteur et émetteur sont solidaires l'un de l'autre.

Le réflecteur constitué pour les deux ailes 112 et 113 présente donc une forme géométrique réfléchissante dont la géométrie combine l'arc de cercle avec la courbe parabolique ou avec la courbe elliptique.

Le tube émetteur 114 par exemple cylindrique, est recouvert d'un matériau réfléchissant 115 comme montré sur les figures, c'est-à-dire avec un léger recouvrement d'angle avec les ailes.

Il peut adopter des formes différentes et être :

- un émetteur circulaire avec chambre d'électrode, selon l'invention,
- un émetteur conventionnel, et/ou
- un émetteur excité par micro-onde.

Les figures 21 à 24 montrent schématiquement les positions respectives du tube 114 par rapport à la génératrice au sommet 116 de la parabole formant en partie les ailes, par exemple en aluminium, ce qui est également vrai dans le cas de l'ellipse.

La séparation entre émetteur et réflecteur permet ici une circulation 117 d'un fluide refroidisseur.

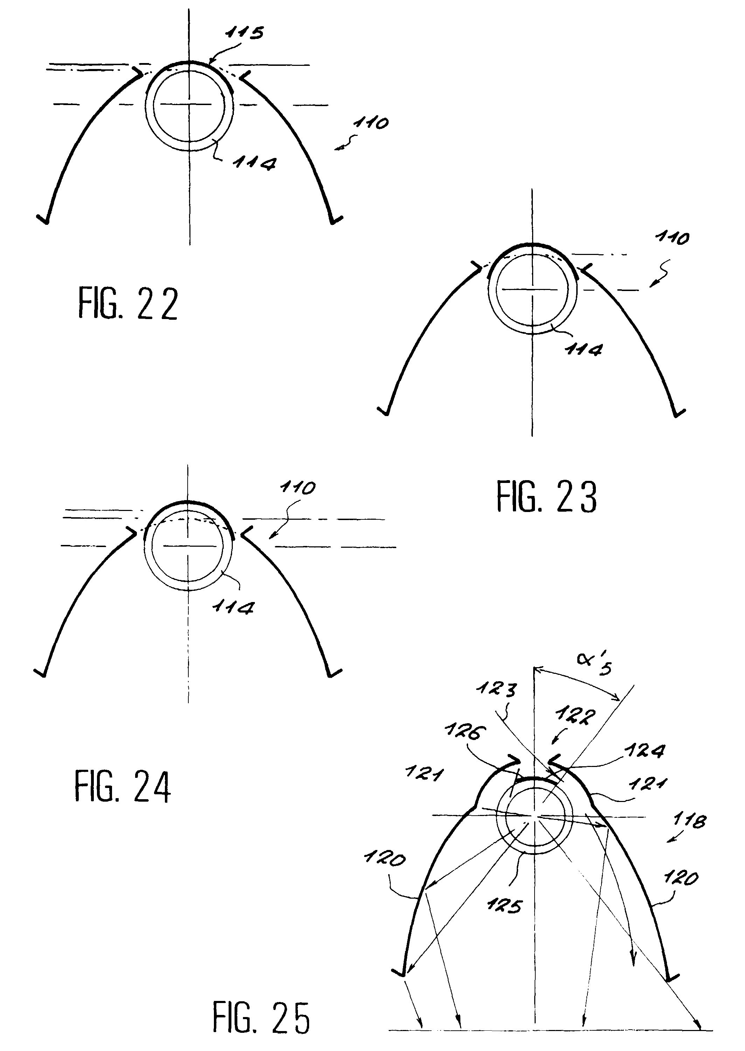

La figure 25 montre un dispositif 118 à surface réfléchissante en ellipse, tout aussi applicable à la forme parabolique.

La figure 25 montre deux ailes 120 symétriques, terminées en partie supérieure par une portion de goulotte cylindrique 121 et séparées entre elles par une fente longitudinale 122, par laquelle peut être introduit un fluide de refroidissement 123.

Le dessus 124 du tube émetteur cylindrique 125 est enduit d'une couche métallique 126 pour ne laisser aucun angle d'échappement pour les rayonnements émis, un recouvrement s'effectuant entre l'extrémité de la portion de goulotte cylindrique 121 et ladite couche métallique également partiellement cylindrique 126.

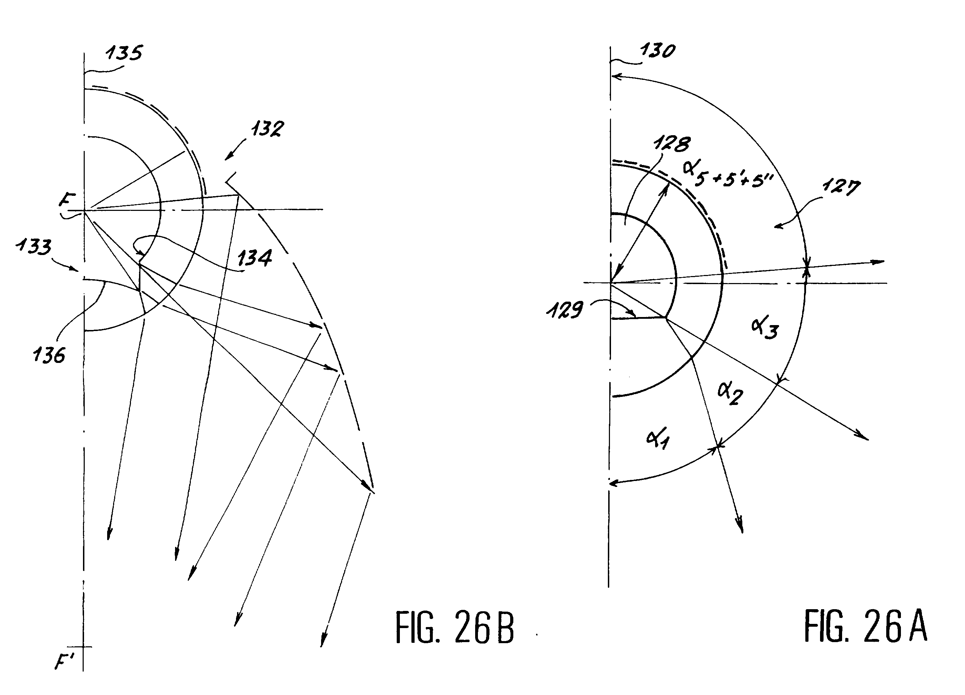

Les figures 26 A, 26 B et 26 C, montrent trois modes de réalisation de tubes cylindriques enduits sur leur portion supérieure d'une couche réfléchissante, selon l'invention.

la figure 26 A montre un tube 127, avec un alésage 128 en cylindre tronqué par un plan inférieur 129 perpendiculaire au plan axial 130, par exemple situé à une distance égale à la moitié du rayon de l'axe 131.

La figure 26 B montre un autre tube émetteur 132 comprenant un évidement 133 sur la face inférieure 134 de l'alésage cylindrique. L'évidement comprend des parois latérales parallèles au plan axial 135 et une face inférieure 136 en portion de cylindre de rayon égal par exemple au rayon externe du tube.

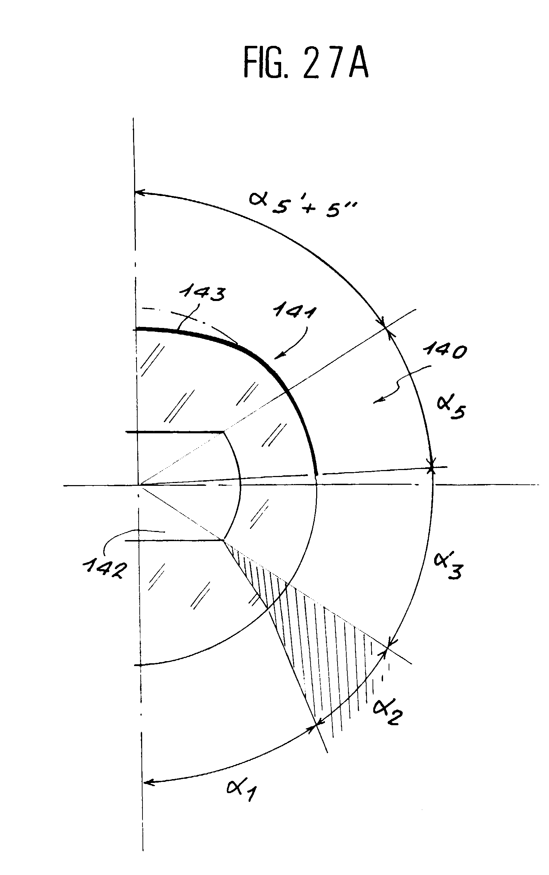

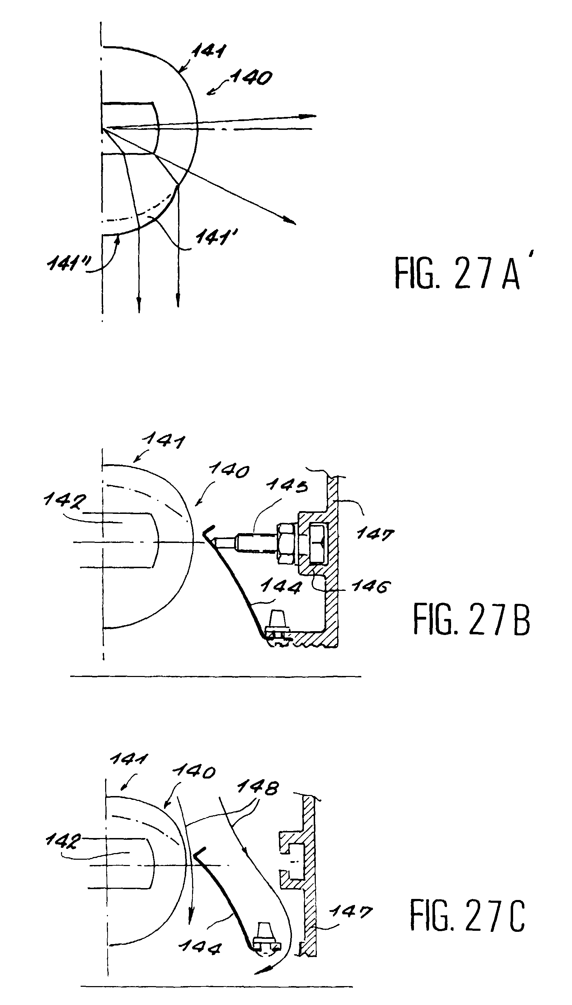

On a représenté sur les figures 27 A, 27 A', 27 B et 27 C un tube émetteur 140 selon l'invention avec réflecteurs en partie dissociés, de forme à section parabolique.

Plus précisément le tube 140 (cf. figure 27 A) est sensiblement cylindrique, sa partie supérieure 141 et son alésage 142 étant du type aplati ou tronqué décrit en référence à la figure 19.

La partie supérieure 141 est recouverte d'une couche réfléchissante 143.

Le tube (voir figure 27 A') peut comprendre une portion inférieure 141' dont la surface externe 141" permet de dévier en flux parallèles par exemple ou encore, dans le cas où on utilise une même forme convexe plus accentuée (avec un rayon de courbure plus petit), de dévier un flux convergent vers le deuxième foyer F', selon les lois de l'optique, les rayons réfractés par la cavité tronquée de l'alésage.

Les ailes 144 entièrement à distance du tube émetteur sont par exemple fixées mécaniquement légèrement en précontrainte de façon à les maintenir en position mathématique par une vis à téton 145 (cf. figure 27 B).

Cette vis est fixée dans une rainure 146 de la structure porteuse du sécheur qui peut être en profil d'aluminium extrudé. Une hypothèse de balayage de refroidissement 148 est montrée à la figure 27 C.

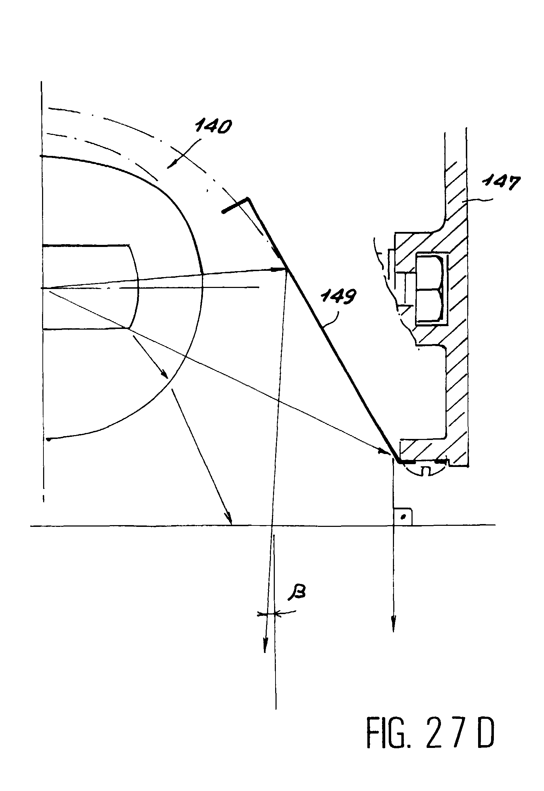

La figure 27 D montre une variante acceptable de l'invention, comprenant des portions d'ailes planes 149, rectangulaires, s'étendant le long du tube et à distance de ce dernier ou non, les portions sont tangentes et/ou sensiblement confondues avec la section parallèle ou elliptique des ailes des figures précédentes.

Ces portions selon l'invention sont donc sensiblement assimilables à une parabole ou ellipse, mais de fabrication plus aisée.

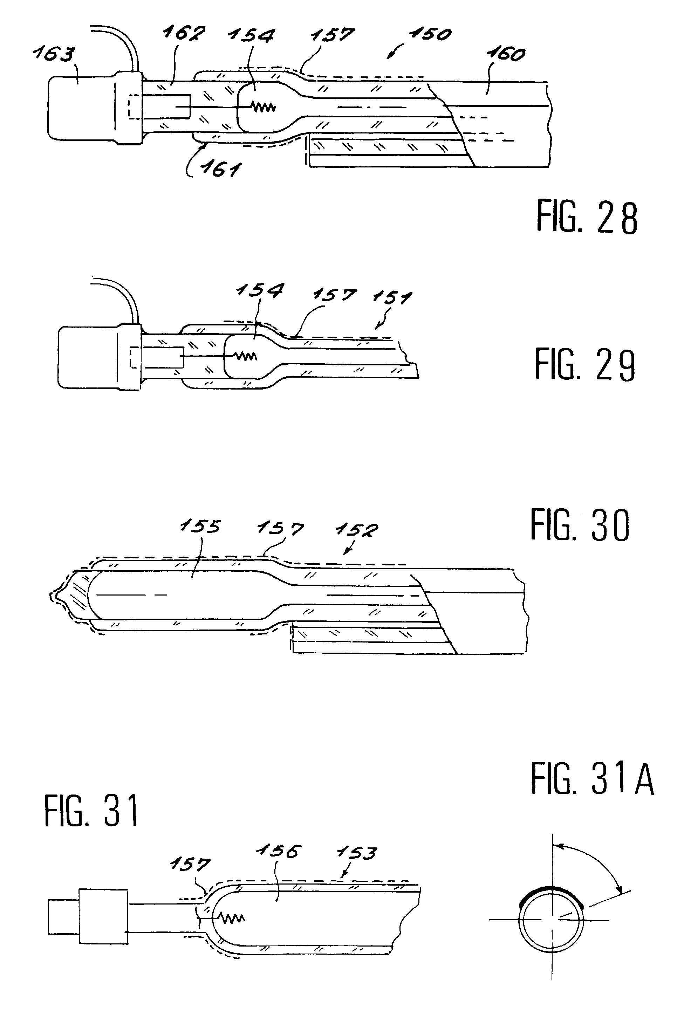

On a représenté (figures 28 à 31 A) plusieurs modes de réalisation d'un émetteur 150, 151, 152, 153 utilisable avec l'invention.

Dans ces modes de réalisation plus particulièrement décrits, on prévoit un disque lumineux d'un diamètre intérieur "ID" d'environ 4 mm (et avantageusement moins) pour toute la longueur rayonnante "$L_{uv}$".

A chaque extrémité, il est prévu une chambre 154, 155, 156 correspondant au logement de l'électrode (quand elle existe) et à la zone potentielle d'encrassement et de dévitrification.

Sur les figures 28 et 29 le diamètre de la chambre "$D_{ce}$" est élargi jusqu'à la valeur habituelle de 11 mm qui, par expérience, est reconnue suffisante au bon fonctionnement de l'électrode et à la résistance mécanique de l'enveloppe quartz.

Sur la figure 30, on a prévu une structure sans électrode, par exemple en cas d'excitation externe par micro-onde.

On observe au cours de fonctionnement d'un émetteur connu, une zone laiteuse autour de l'électrode qui s'opacifie progressivement sur une certaine longueur "$L_{ce}$", qui est classiquement la longueur de la chambre de l'électrode.

Cette longueur commence au pied de l'électrode et se termine avec l'invention à la réduction du diamètre intérieur "ID".

Pour y palier, il est donc également proposé sur toute la périphérie extérieure de la chambre, l'enduction d'un matériau de réflexion 157 destiné au maintien d'une certaine température rayonnante à l'électrode. Cette enduction est représentée en traits pointillés sur les figures 28 à 31 A.

L'invention permettant un séchage d'une encre ou d'un vernis, au moyen d'un émetteur ultraviolet, qui ne dépend pas tant de l'augmentation des puissances linéiques que de la modification de la forme du disque lumineux et/ou de la diminution de sa section, il s'ensuit que pour le même résultat, lesdites puissances linéiques pourront être abaissées, ce qui permet à faible puissance (≤ 30 W/cm) de s'affranchir de toute chambre d'électrode, même à très petit diamètre (figure 31).

Il est décrit ci-après à titre d'illustration de sa facilité de réalisation, un exemple de fabrication de dispositif émetteur/réflecteur en référence à la figure 28.

Le dispositif émetteur/réflecteur 150, également du type de la figure 10, comprend un corps 160.

On chauffe tout d'abord l'extrémité 161 du corps que l'on sertit ensuite au diamètre du bouchon 162 de l'électrode, réalisé de façon habituelle.

Le bouchon comporte un embout 163 en céramique tel que l'utilise par exemple la Société Philips sur ses propres fabrications.

L'assemblage se réalise en fait en trois temps :

- On apprête l'extrémité du dispositif émetteur/réflecteur, sur une longueur "$L_{ce}$", en coupant par meulage au niveau de la cavité dioptrique, ce qui est aisé puisque le tube constituant l'enveloppe de l'émetteur est pratiquement achevé dans sa configuration cylindrique, au moment du filage; puis, on chauffe le quartz jusqu'à sa température de ramollissement; on évase ensuite le diamètre pour l'amener au diamètre extérieur du bouchon de l'électrode;

- On monte alors le bouchon 162 de l'électrode sur le corps 160 du dispositif émetteur/réflecteur en chauffant; on crée ainsi une fusion complète d'une pièce sur l'autre selon le même méthode que celle utilisée par le verrier pour fermer l'extrémité de l'émetteur.

- Enfin, on installe l'embout céramique 163 sur le bouchon de l'électrode après avoir fait le raccordement électrique par soudure.

L'introduction du mercure se fait quant à elle selon les méthodes habituelles de fabrication.

On réalise ensuite l'enduction d'une couche de réflexion sur l'émetteur et sur les extrémités de l'émetteur/réflecteur et/ou en partie ou en totalité sur les ailes.

A la faveur des faibles puissances linéiques (≤ 30 Watts/cm), conséquentes à la forte augmentation du rendement énergétique, il est possible, pour des émetteurs d'une longueur rayonnante "$L_{uv}$", variable jusqu'à un peu plus d'un mètre, d'augmenter la tension linéique jusqu'à une valeur de 30 volts/cm (soit 3000 volts en tension d'alimentation, valeur encore utilisée dans la profession) ce qui favorise une meilleure qualité de l'arc ultraviolet tout en conservant un courant d'une intensité maximum de l'ordre de 1 A.

Les puissances plus classiques de 80 W/cm sont bien entendu également adoptables en y appropriant si besoin la ventilation nécessaire au refroidissement.

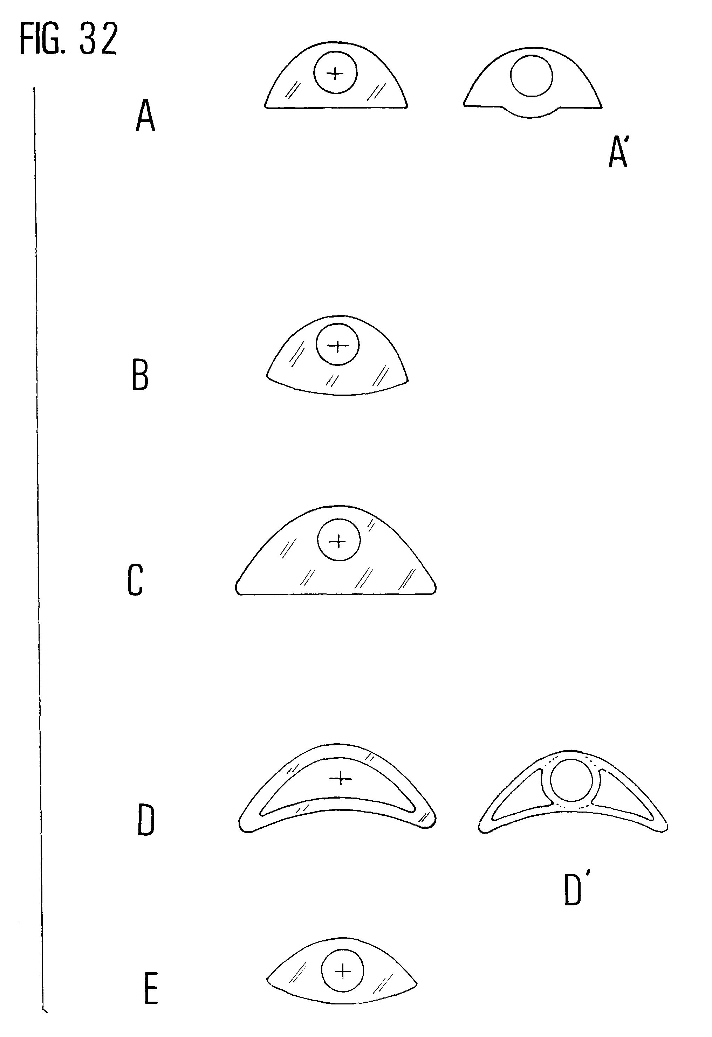

La figure 32 montre en coupe plusieurs modes de réalisation de l'invention, dont la face transparente présente des formes différentes en fonction des applications souhaitées.

Ainsi, la figure 32 A montre une section en demi lune.

La figure 32 A montre le même type de section, mais avec une calotte cylindrique inférieure de type décrit en référence à la figure 19 A.

La figure 32 B montre un alésage de section transversale en forme d'oeil, la paroi inférieure étant convexe.

La figure 32 C montre un mode de réalisation de dispositif du type de la figure 1, avec une grande épaisseur de paroi inférieure et une surface réflectrice parabolique.

La figure 32 D donne une version avec alésage de section en forme de boomerang, avec paroi réflectrice parallèle à l'alésage.

La figure 32 D' donne une autre version avec trois alésages dont un alésage cylindrique central, et deux alésages latéraux symétriques par rapport au plan axial, de section sensiblement triangulaire et dont les parois sont parallèles d'une part aux parois externes du dispositif et d'autre part aux parois de l'alésage.

La figure 32 E montre encore un autre mode de réalisation d'un dispositif, symétrique par rapport à un plan axial en forme de deux portions de paraboles ou d'ellipses opposées avec alésage cylindrique.

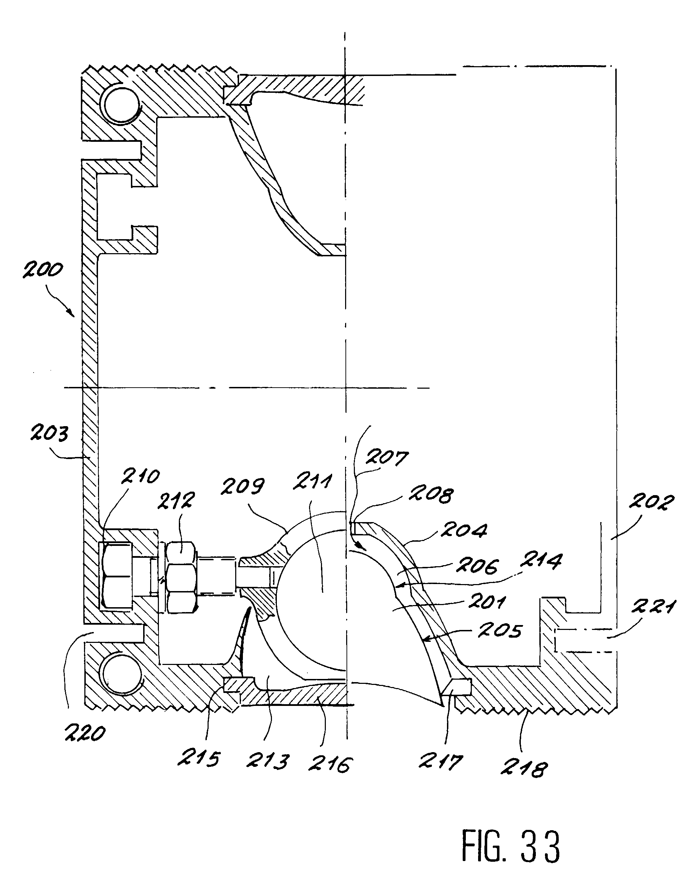

On a représenté sur les figures 33 à 37 des appareils comportant un ou plusieurs dispositifs correspondant à un plusieurs types décrits ci-dessus.

La figure 33 est une vue schématique en coupe d'un appareil 200 selon l'invention pouvant comprendre deux dispositifs identiques 201 situés sur deux parois opposées d'une structure de maintien 202.

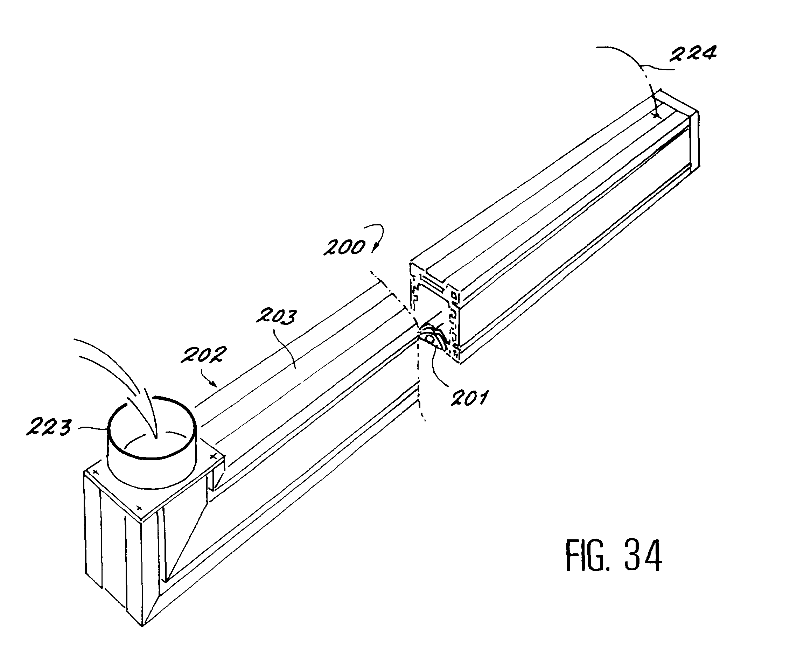

En référence à la figure 34, l'invention propose donc un appareil 200, sécheur ultraviolet, dont la structure de maintien 202 est formée d'un tube 203 profilé en aluminium extrudé qui peut être de forme carrée ou rectangulaire, circulaire ou ovoïde et comprenant sur son axe y un seul ou deux dispositifs 201 en opposition.

Plus précisément, le dispositif émetteur/réflecteur 201 de la figure 33 est monté dans la structure profilée en aluminium 203 pour laquelle le dessin de la forme intérieure dite "en berceau" 204 est identique à celui de la forme convexe 205 du dispositif.

Un espace de ventilation 206 d'environ 1 mm est réservé entre les deux formes.

L'espace de ventilation est plus faible que la section d'air au profilé, pour provoquer une perte de charge sensible au bas du dispositif 201 et obliger ainsi les flux d'air 207 à s'uniformiser au dos et de part et d'autre du dispositif rayonnant.

Cette forme "en berceau", comporte au sommet une fente longitudinale 208 dont la largeur est variable en fonction du sens de la ventilation de telle sorte que le flux d'air qui balaye le dos du dispositif soit constant sur toute la longueur.

Le dispositif émetteur/réflecteur 201 est par ailleurs maintenu en position géométriquement centrée par rapport au profilé aluminium grâce à une pièce de maintien 209 fixée à chaque extrémité du dispositif.

Au montage de ce dernier, la pièce de maintien 209 se glisse simultanément dans les deux rainures intérieures 210 du profilé et dans l'embout cylindrique en céramique 211 du dispositif.

On notera que la pièce de maintien 209 est par exemple constituée de trois éléments flottants permettant de conserver le dispositif émetteur/réflecteur positionné au centre du profilé aluminium tout en acceptant les tolérances de fabrication.

Sa fixation est réalisée au moyen de deux boulons 212 logés et serrés dans les rainures 210 intérieures basses du profilé.

On rapporte par ailleurs à chaque extrémité du dispositif un couvercle 213 permettant de séparer la ventilation longitudinale qui est véhiculée dans le profil extrudé comme s'il s'agissait d'une gaine aéraulique normale, de la ventilation transversale qui est répartie à flux sensiblement laminaire dans l'espace réservé au dos 214 du dispositif émetteur/réflecteur.

Son montage et sa fixation mécanique procède du même principe que la pièce de maintien 209.

Aux extrémités du dispositif sont glissés dans les rainures hautes et basses 215, des couvercles 216, qui, une fois à leur place, positionnent longitudinalement le dispositif dans le profil.

Enfin et par exemple dans le sens transversal du dispositif, logé dans les deux rainures basses, de part et d'autre, sont fixées deux petites cales entretoises 217 en forme de pointe, pour éviter les ponts thermiques.

Ces petites cales sont destinées à conserver l'espace de ventilation et à maintenir le dispositif 201 centré dans le profil selon les deux axes.

Le couvercle extérieur est quant à lui percé à l'aplomb des longueurs d'extrémités du dispositif, d'une fente longitudinale (non représentée) d'une longueur inférieure à "$L_E$" (longueur de l'embout) et d'une largeur d'environ 3 mm pour favoriser la chute de température de l'embout céramique au pied de l'électrode selon un gradient jusqu'à 300°C.

La surface extérieure, côté largeur du profil, est garnie de petits sillons 218 qui sont autant de surfaces inclinées destinées à empêcher la sortie incontrôlée de rayons réfléchis diffus.

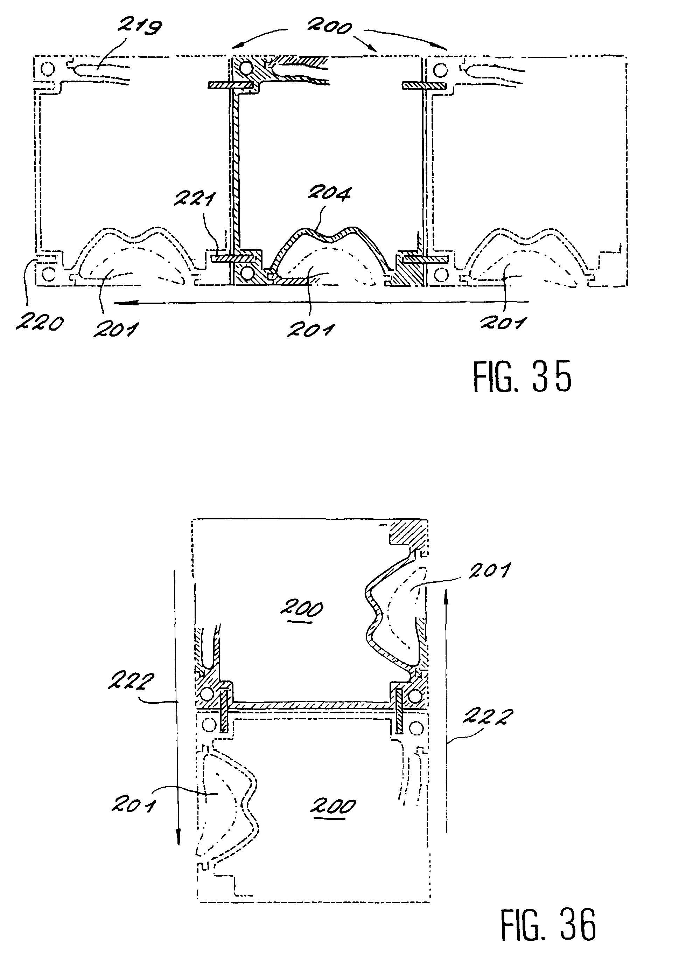

La largeur opposée à la partie rayonnante est aménagée d'un couloir 219 (figure 35) étroit destiné à recevoir l'ensemble de la logistique électrique (non représenté) nécessaire au sécheur comme la câblerie des émetteurs et celle des éléments de contrôle thermostatiques et photométriques.

Cette même largeur peut être envisagée pour recevoir un éventuel deuxième dispositif émetteur/réflecteur 201.

Sa forme en berceau peut être utilisée aussi comme logement à la câblerie électrique en utilisation avec un seul émetteur/réflecteur.

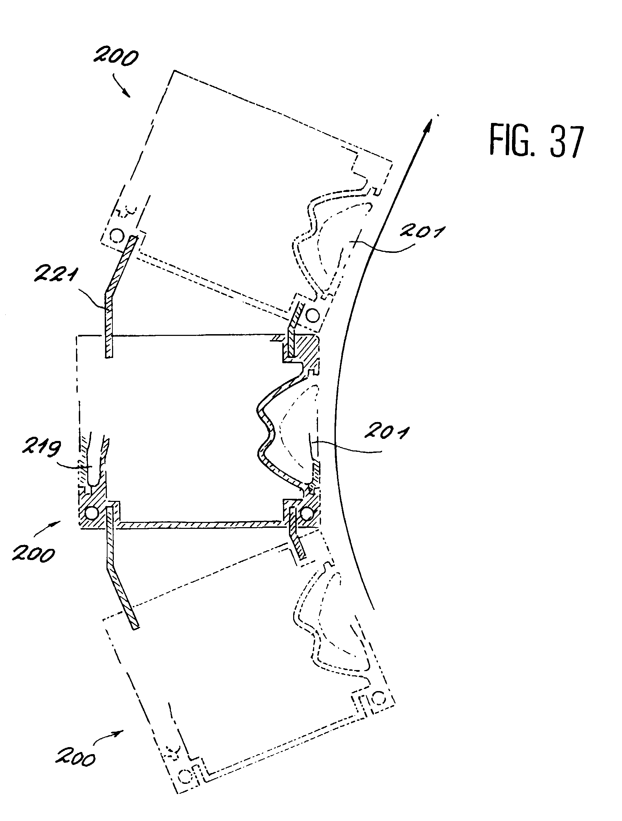

Sur les deux longueurs du profil rectangulaire, en paroi extérieure, sont aussi aménagées des rainures rectangulaires 220 permettant d'associer à la fois plusieurs sécheurs par l'intermédiaire d'entretoises 221 dont la largeur et la forme, variables, permettent de construire un ensemble de sécheurs jointifs ou séparés, en montage rectiligne ou de forme circulaire (figure 37), ou carré, ou rectangulaire, ou polygonale.

Les entretoises 221 deviennent, par là même, les parois extérieures et intérieures de l'enceinte de traitement. Par ailleurs, la forme homogène du profil permet de monter tout aussi facilement "tête-bêche" (figure 36) un ensemble de sécheurs permettant un minimum d'encombrement pour traiter deux laizes en "aller et retour" (flèche 222).

Enfin, à chaque extrémité longitudinale du sécheur (figure 34), on trouve d'un côté, le raccordement 223 de la conduite de ventilation, de l'autre, les raccordements électriques 224 de l'émetteur, relais thermostatiques, et cellule photométrique.

L'invention est également applicable à des émetteurs basse pression non fluorescents comme pour des lampes rayonnant dans la lumière visible.

Concernant la ventilation à chaque extrémité de l'émetteur, sur toute la longueur "$L_{ce}$", l'ouverture à l'air de la structure est beaucoup plus importante de façon à favoriser la chute de température à des valeurs inférieures ou égales à 300°.

On remarquera que la source rayonnante se situe dans la courbe circulaire 20 du dispositif (figure 2), là où la température est la plus importante, alors que les deux extrémités en forme d'aile en 14 sont balayées par une ventilation extérieure moins importante pour tenir compte des différences de dilatation et minimiser les tensions internes.

On profite de la faible dilatation du quartz pour ignorer les différences de températures qui existent entre l'enveloppe circulaire de la partie tubulaire dite "de l'émetteur" et les extrémités externes de la partie elliptique ou parabolique dite "du réflecteur".

Pour mémoire, la distribution de la ventilation destinée au maintien des températures de fonctionnement en différents points de l'éléments rayonnant est connue de l'homme du métier qui joue sur les dimensions des orifices, leur position, sur le choix du ventilateur et ses caractéristiques (débit/pression) pour modeler les courants aérauliques aux nécessités thermomécaniques de l'élément rayonnant.

Compte tenu de la bonne maîtrise des flux d'air circulant autour de l'élément rayonnant avec l'invention, le débit nécessaire aux équilibres thermiques reste inférieur à 50 m$^3$/h/kW.

Il est ici intéressant de citer cinq avantages apportés par le dispositif émetteur/réflecteur selon l'invention :

- A même capacité de polymérisation d'un système de séchage connu, la ventilation de soufflage nécessaire au refroidissement de l'élément rayonnant est considérablement diminuée au point de pouvoir s'intégrer facilement dans les volumes perdus de la machine d'impression.
- Le dispositif émetteur/réflecteur n'ayant pas de surface de réflexion mécanique ou de surface rayonnante balayée par la ventilation, la filtration de l'air n'est pas nécessaire.
- Conséquence du second avantage, l'élément rayonnant n'ayant aucune surface de réflexion mécanique à l'air, la dégradation du coefficient de réflexion dans le temps est impossible et sa qualité réflectrice ne s'altère pas.
- Par conséquent, à cause de l'absence quasi totale de flux d'air sous la partie rayonnante, sauf par effet Venturi de la laize en défilement, la quantité d'ozone est imperceptible aux éléments de mesure, et la ventilation d'extraction étant inutile, le risque d'oxydation des parties métalliques de la machine devient négligeable.
- Compte tenu de la faible quantité d'air ventilée, on peut d'ailleurs assurer, si le produit le nécessite, une couverture aéraulique antioxydante en remplaçant, par exemple, l'air par de l'azote.

Les nombreux avantages de l'invention sont notamment dus aux sept paramètres suivants :

- la diminution de la section lumineuse,
- la forme non circulaire du disque lumineux,
- la diminution du chemin parcouru,
- l'absence d'ozone,
- la courbe de réflexion dioptrique, avec un coefficient de réflexion 1,
- la courbe de transparence dioptrique, avec un cosinus de l'ordre de 1,
- la forte densité de puissance.

En résumé et de façon d'ailleurs non exhaustive, les avantages de l'invention sont la très faible puissance linéique à résultats photochimiques identiques, par conséquent et dans les mêmes proportions, la diminution de l'énergie thermique parasite; la directivité d'un flux homogène et parallèle à densité de puissance constante; le caractère inaltérable de la surface de réflexion, par conséquent, l'absence de dispositif de filtration; l'absence d'ozone mesurable; la faible ventilation de refroidissement qui rend l'installation aéraulique insignifiante; les dispositions électriques et d'encombrement de l'armoire très réduites; l'extrême simplification de la fabrication du sécheur; les dimensions du sécheur très réduites par rapport à la concurrence; l'installation du sécheur ultraviolet directement au poste d'encrage ou de vernissage; l'émetteur/réflecteur, seul composant à durée de vie; la suppression de l'effet de fléchissement dit effet "banane", etc.

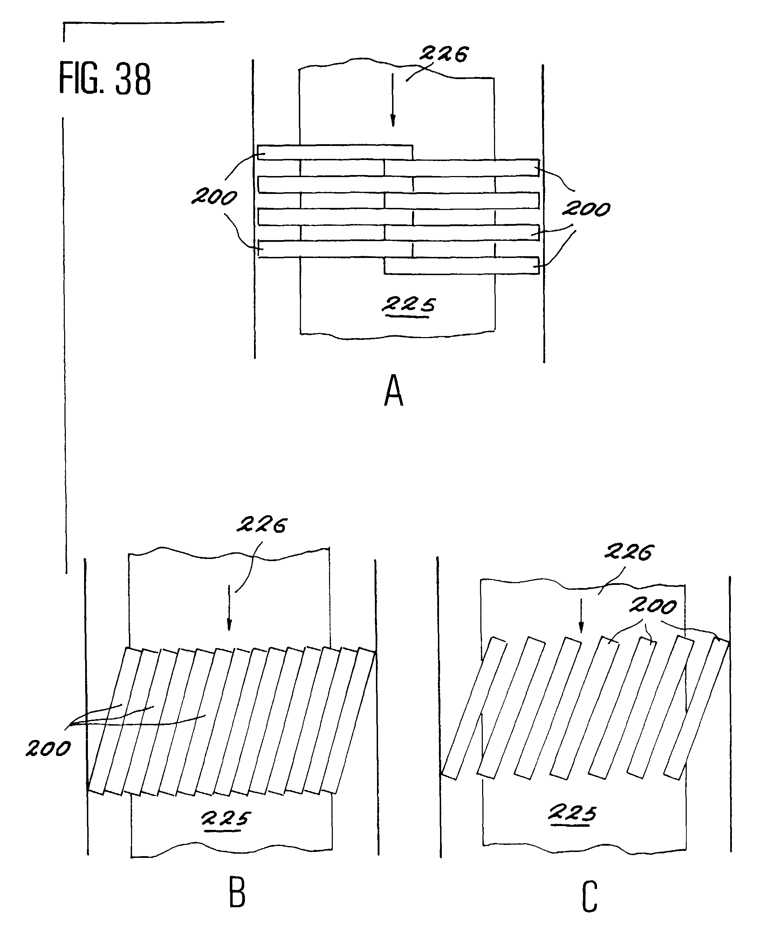

Les figures 38 A, B et C montrent en vue de dessus des appareils selon l'invention comprenant plusieurs appareils 200 disposés pour sécher une nappe de produits 225.

La figure 38 A montre des appareils 200 disposés perpendiculairement au sens 226 de défilement des produits en alternance droite/gauche, avec un léger recouvrement au centre du produit.

Les figures 38 B et C montrent des appareils 200 disposés obliquement par rapport au sens de défilement avec un angle compris entre 5° et 20°, avantageusement 15° pour répartir les rayonnements de façon homogène.

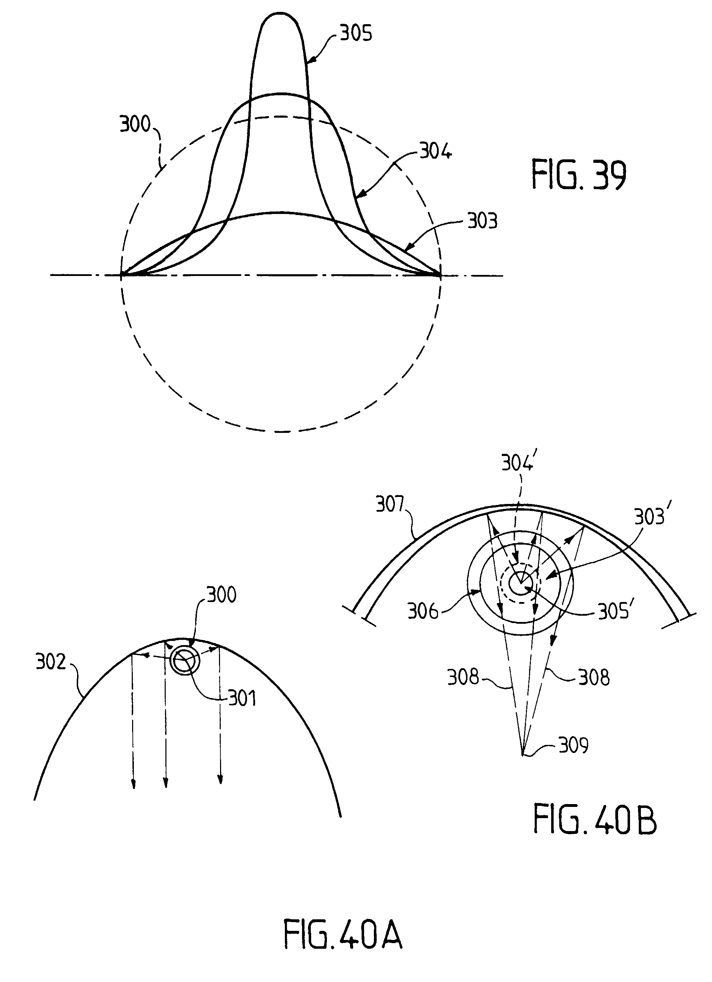

La figure 39 montre trois courbes de répartition de la densité lumineuse dans un tube cylindrique 300. Le tube cylindrique 300, par exemple de petit diamètre (< 10 mm), est placé au foyer 301 d'une parabole réflectrice 302 (Cf. figure 40A).

La courbe 303 montre une répartition sensiblement homogène, le plasma 303' (Cf. figure 40B) occupant l'ensemble du volume du tube, par exemple avec une tension linéique, pour un tube de quelques centimètres de longueur, de 5Volts/cm.

La courbe 304 montre la répartition de densité 304' pour une tension entre électrodes de 30Volts/cm et la courbe 305 la répartition du plasma 305' pour une tension de 100Volts/cm.

Dans ce cas le faisceau plasmatique est presque linéaire, de section proche du point, et décollé des parois 306.

Dans le cas de la figure 40B, la paroi réflectrice 307 est de section transversale hyperbolique, les rayonnements émis 308 par le faisceau étant renvoyés au foyer 309, sans interférences avec le faisceau 305'.

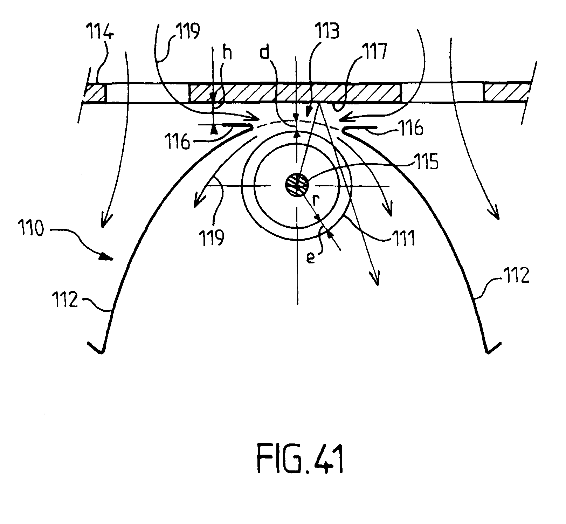

La figure 41 montre un dispositif 110 comprenant un tube cylindrique de section constante 111 de petit diamètre, par exemple inférieur à 9 mm, muni de deux ailes 112 de sections transversales en forme de portion d'ellipse, recouvertes d'un matériau réfléchissant, séparées à leur sommet par une fente 113, par exemple de 1 à 5 cm de large.

Le dispositif comporte une plaque 114 plate, horizontale, en vis-à-vis du tube 111 entièrement à distance des ailes.

La distance d entre axe et génératrice supérieure de l'ellipse est telle que d = f et d ≤ r + e + 1 mm (f = distance au foyer ; r = rayon du tube ; e = épaisseur du tube), ladite plaque étant réfléchissante des rayonnements émis par un faisceau plasmatique 115 de diamètre inférieur à celui de l'alésage interne du tube. La plaque (tôle) sert de support à l'ensemble de l'émetteur/réflecteur.

Elle est située à une distance h, par exemple de 10 mm à 3 cm, par exemple 1 cm, et est fixée par exemple par des entretoises (non représentées) sur lesquelles viennent reposer les bords plats 116 d'extrémité supérieure des ailes.

La face inférieure 117 de la plaque 114 située en vis-à-vis de la fente 113 est rendue réfléchissante par collage, dépôt ou pelliculage d'un matériau réfléchissant, des orifices 118 de passage de l'air 119 de refroidissement étant prévus sur les côtés.

Comme il va de soi, et comme il résulte d'ailleurs de ce qui précède, la présente invention ne se limite pas aux modes de réalisation plus particulièrement décrits, mais en embrasse au contraire toutes les variantes et notamment et par exemple celles où la section du disque lumineux est plus aplatie, ou encore tronquée latéralement.

L'invention concerne également des appareils qui permettent la stérilisation de l'eau autour d'un axe et le séchage d'encre et vernis à polymériser sur des produits filaires ou circulaires autour d'un axe tel que le marquage de fils électriques, câbles, tuyaux de caoutchouc, tube P.V.C., etc.

Ainsi, un émetteur/réflecteur ultraviolet selon l'invention peut être monté sur une chambre de stérilisation ou de polymérisation par exemple en opposition autour d'un cylindre transparent servant de chambre de stérilisation ou de polymérisation.

L'appareil de traitement de produits axiaux peut quant à lui comporter plusieurs dispositifs rayonnants, par exemple trois, cinq ou sept, disposés régulièrement en étoile autour d'un cylindre transparent servant de chambre de stérilisation.

**Revendications**

1. Dispositif émetteur/réflecteur (1, 30, 70, 90, 110, 118, 132, 140) de rayonnements ultraviolets comprenant un tube à électrodes (2, 35, 114, 141) en quartz transparent, rectiligne, percé de bout en bout d'un alésage (3, 34, 72, 93, 111, 128, 142) de rétention d'un gaz ionisant en haute ou moyenne pression, allongé autour d'un axe (4) et propre à contenir un faisceau émetteur de rayonnements, et une surface réflectrice (7) des rayonnements émis comportant deux ailes latérales (14, 31, 75, 112, 113, 120, 128) longitudinales symétriques par rapport à un plan axial (10) de l'alésage, ladite surface réflectrice étant au moins en partie solidaire du tube émetteur et présentant une section transversale au moins en partie strictement ou sensiblement parabolique ou elliptique, caractérisé en ce que le diamètre ou la dimension maximale interne de l'alésage du tube est inférieur ou égal à 9 mm; et que les portions de surface réflectrice correspondant aux ailes latérales et présentant une section transversale au moins en partie parabolique ou elliptique, appartiennent à une courbe dont la génératrice au sommet est située à une distance d de l'axe de l'alésage, dans le plan axial de symétrie telle que :

   d = f et 0 < d < r + e + 1 mm        avec

f : distance entre le foyer de la parabole (8) ou de l'ellipse (F) et la génératrice au sommet (9) correspondante,

r : distance entre l'axe (4) et la surface interne de l'alésage dans le plan axial, du coté de la génératrice au sommet, et

e : épaisseur du tube dans le plan axial (10), du coté de la génératrice au sommet (9).

2. Dispositif selon la revendication 1 caractérisé en ce que d = r + e .

3. Dispositif selon la revendication 1 caractérisé en ce que r ≤ d < r + e .

4. Dispositif selon la revendication 1 caractérisé en ce que d ≤ r .

5. Dispositif selon l'une quelconque des revendications précédentes, caractérisé en ce que l'alésage est cylindrique.

6. Dispositif selon l'une quelconque des revendications 1 à 4 caractérisé en ce que la section transversale de l'alésage (93) est de forme circulaire au moins en partie tronquée.

7. Dispositif selon l'une quelconque des revendications précédentes, caractérisé en ce que la surface réflectrice est entièrement solidaire dudit tube.

8. Dispositif selon la revendication 7 caractérisé en ce que la paroi externe du tube comprend une goulotte (20) située du coté de la génératrice au sommet par rapport à l'alésage, de surface externe adaptée à la paroi interne de l'alésage et agencée pour renvoyer les rayonnements émis vers la goulotte, en retour vers le centre de l'alésage, ladite goulotte étant recouverte d'une couche de matière (11) réfléchissante.

9. Dispositif selon l'une quelconque des revendications 7 et 8 caractérisé en ce que le tube est plein entre les extrémités des ailes latérales (13, 14) dont les faces internes forment au moins en partie ladite surface réflectrice par réfraction dioptrique.

10. Dispositif selon l'une quelconque des revendications 7 et 8 caractérisé en ce que la surface réflectrice est entièrement recouverte d'une couche de matériau réfléchissant.

11. Dispositif selon l'une quelconque des revendications 7 à 10 caractérisé en ce que la surface réflectrice est de section parabolique ou en partie parabolique et le tube comporte une face externe (15) de jonction des extrémités des ailes, située du coté opposé à la génératrice au sommet par rapport à l'alésage, plane et perpendiculaire au plan axial contenant ladite génératrice au sommet.

12. Dispositif selon l'une quelconque des revendications 7 à 10 caractérisé en ce que la surface réflectrice est de section elliptique ou en partie elliptique et le tube comporte une face externe (38) de jonction des extrémités des ailes, située du coté opposé à la génératrice au sommet par rapport à l'alésage, concave, selon une courbe symétrique par rapport au plan axial contenant la génératrice au sommet, ladite face externe étant agencée pour diriger au moins en partie les rayons émis vers le plan axial de l'alésage.

13. Dispositif selon l'une quelconque des revendications 7 à 12 caractérisé en ce que le tube comporte, du coté opposé à la génératrice au sommet, une portion de quartz pleine en partie évidée, formant une cavité dioptrique longitudinale, ladite partie évidée comprenant une face convexe en portion de cylindre, dirigée du coté de l'axe du tube et située à la distance r + e dudit axe.

14. Dispositif selon la revendication 13 caractérisé en ce que la section de ladite face externe est plane sur une première partie centrée par rapport au plan axial, et courbe sur une deuxième partie.

15. Dispositif selon l'une quelconque des revendications précédentes dépendantes de la revendication 8, caractérisé en ce que la goulotte (20, 32) comporte une face externe réfléchissante (51, 52, 53) située à une distance x de l'axe de l'alésage, telle que :

r < x ≤ 2y

avec

y : distance entre la surface interne de l'alésage et le point de discontinuité de la pente de la surface réflectrice de l'aile.

16. Dispositif selon l'une quelconque des revendications précédentes dépendantes de la revendication 9, caractérisé en ce que il comporte de plus des plaques (48) longitudinales latérales réflectrices, réfléchissantes, situées de part et d'autre des extrémités des ailes, symétriquement par rapport au plan axial (10).

17. Dispositif selon la revendication 8, caractérisé en ce que le tube est en forme de cylindre muni de deux pattes (73) latérales longitudinales, symétriques par rapport au plan axial passant par la génératrice au sommet, dirigées vers le plan d'irradiation et dont les surfaces externes respectives forment les ailes en portion de parabole ou d'ellipse.

18. Dispositif selon la revendication 17, caractérisé en ce que les faces d'extrémité (79) des pattes sont perpendiculaires au plan axial contenant la génératrice au sommet.

19. Dispositif selon la revendication 17, caractérisé en ce que les faces d'extrémité des pattes sont concaves et agencées pour diriger les rayonnements incidents sur lesdites faces vers le plan axial de l'alésage contenant la génératrice au sommet.

20. Dispositif selon l'une quelconque des revendications 17 à 19 caractérisé en ce que l'alésage cylindrique comporte sur sa surface interne opposée à la génératrice au sommet, deux excroissances (83) de section triangulaire, symétriques par rapport au plan axial contenant ladite génératrice au sommet, lesdites excroissances comportant chacun une paroi parallèle au plan axial et telles que l'angle au centre de l'alésage dans lequel elles s'inscrivent passe par les deux pointes d'extrémité de la patte correspondante.

21. Dispositif selon l'une quelconque des revendications précédentes, caractérisé en ce que l'alésage (34) comporte une face interne, du coté opposé à la génératrice au sommet par rapport à l'axe, munie d'un évidemment dioptrique (60) longitudinal présentant une paroi inférieure en portion de cylindre de rayon r' égal ou différent de r et des parois latérales parallèles au plan axial de l'alésage.

22. Dispositif (110) selon l'une quelconque des revendications 1 à 6 caractérisé en ce que la portion supérieure de la surface externe du tube est recouverte d'une matière réfléchissante, et en ce que les deux ailes latérales (112, 113, 120) sont entièrement situées à distance du tube émetteur.

23. Dispositif selon la revendication 22 caractérisé en ce que les ailes latérales (120) entièrement situées à distance du tube et présentant une section au moins en partie parabolique ou elliptique, sont prolongées en partie supérieure par une portion cylindrique (121) coaxiale avec l'alésage.

24. Dispositif selon la revendication 22 dépendante de la revendication 1, caractérisé en ce que les deux ailes latérales sont constituées par des plaques réfléchissantes longitudinales.

25. Dispositif selon l'une quelconque des revendications précédentes, caractérisé en ce que le tube comporte des chambres d'électrode (154) de section interne supérieure ou égale à la section interne du faisceau émetteur de rayonnement dudit tube.

26. Dispositif selon l'une quelconque des revendications précédentes, caractérisé en ce que la section constante du faisceau plasmatique est inférieure ou égale à de l'ordre de 45 mm$^2$, à de l'ordre de 30 mm$^2$ ou encore à de l'ordre de 10 mm$^2$.

27. Appareil (200) de traitement de produits disposés en nappe, en fil ou en cylindre, par rayonnements ultraviolets, comportant au moins un dispositif (201) selon l'une quelconque des revendications précédentes.

28. Appareil de séchage selon la revendication 27 caractérisé en ce que il comporte des moyens de refroidissement agencés pour faire passer un gaz de refroidissement à l'extérieur d'au moins une partie de la surface réflectrice du dispositif.

29. Appareil selon l'une quelconque des revendications 27 et 28 caractérisé en ce que il comporte au moins deux dispositifs (201) dirigés dans le sens opposé.

30. Appareil selon l'une quelconque des revendications 27 à 30, caractérisé en ce que il comporte plusieurs dispositifs (201) disposés obliquement par rapport au sens de défilement des produits à traiter.

31. Appareil selon l'une quelconque des revendications 27 à 30, caractérisé en ce que il comporte plusieurs dispositifs disposés angulairement les uns par rapport aux autres.

32. Procédé d'application de rayonnements à un produit en nappe ou disposé sur une surface plane ou courbe, caractérisé en ce que on irradie ledit produit avec un faisceau plasmatique de rayonnements ultraviolets allongé autour d'un axe, de section transversale constante inférieure ou égale à de l'ordre de 45 mm$^2$, ledit faisceau étant généré dans un tube à électrodes du dispositif de la revendication

33. Procédé selon la revendication 32, caractérisé en ce que on irradie ledit produit avec un faisceau cylindrique plasmatique de rayonnements ultraviolets allongé autour d'un axe, de section inférieure ou égale à de l'ordre de 30 mm$^2$.

34. Procédé selon la revendication 33, caractérisé en ce que on irradie ledit produit avec un faisceau cylindrique plasmatique de rayonnements ultraviolets allongé autour d'un axe, de section transversale constante et inférieure ou égale à de l'ordre de 10 mm$^2$.

35. Procédé selon l'une quelconque des revendications 32 à 34, caractérisé en ce qu'on irradie le produit avec des rayonnements primaires issus directement du faisceau plasmatique et simultanément avec des rayonnements secondaires issus des rayonnements primaires par réfraction dioptrique sur une paroi réflectrice présentant une section transversale au moins en partie elliptique.

**36.** Procédé selon la revendication 34,caractérisé en ce qu'on irradie le produit avec des rayonnements primaires issus directement du faisceau plasmatique et simultanément avec des rayonnements secondaires issus des rayonnements primaires par réfraction dioptrique sur une paroi réflectrice présentant une section transversale au moins en partie parabolique.

**37.** Procédé selon l'une quelconque des revendications 32 à 36 caractérisé en ce que on irradie le produit avec des rayonnements entièrement issus et réfléchis par un même tube de délimitation du faisceau plasmatique, comportant une surface réflectrice solidaire du tube émetteur dudit faisceau plasmatique.

**38.** Procédé selon l'une quelconque des revendications 32 à 37 caractérisé en ce que la longueur du faisceau cylindrique plasmatique de section constante est supérieure à trente centimètres.

**39.** Procédé selon la revendication 38, caractérisé en ce que la longueur du faisceau plasmatique de section constante est supérieure à un mètre.

**40.** procédé selon l'une quelconque des revendications 32 à 39, caractérisé en ce que la tension linéique du faisceau plasmatique a une valeur supérieure à de l'ordre de 30 Volts/cm.

**41.** Procédé selon la revendication 40, caractérisé en ce que la tension linéique a une valeur supérieure ou égale à 50Volts/cm, avantageusement 100 Volts/cm.

**42.** Procédé selon la revendication 32,caractérisé en ce que la longueur du faisceau plasmatique émetteur de rayonnements ultraviolets est supérieure à de l'ordre de 1 m 50 et la tension linéique supérieure à 20 Volts/cm.

**43.** Procédé selon l'une quelconque des revendications 32 à 42, caractérisé en ce que le rayon de la section transversale du faisceau plasmatique, par rapport au diamètre équivalent à d du tube est tel que

$$\frac{1}{100}\, d \leq r \leq \frac{1}{2}\, d$$

**44.** Procédé selon l'une quelconque des revendications 32 à 43, caractérisé en ce que on irradie avec un faisceau plasmatique émetteur de rayonnements ultraviolets en forme de cylindre tronqué.

**Patentansprüche**

**1.** Vorrichtung zum Aussenden und Reflektieren (1, 30, 70, 90, 110, 118, 132, 140) ultravioletter Strahlen, die eine gerade Elektrodenröhre (2, 35, 114, 141) aus transparentem Quarz umfasst, die von einem zum anderen Ende eine Bohrung (3, 34, 72, 93, 111, 128, 142) zum Zurückhalten eines ionisierenden Gases mit hohem oder mittlerem Druck aufweist, die um eine Achse (4) herum vorgesehen und geeignet ist, ein Bündel zu enthalten, das Strahlungen aussendet, sowie eine Fläche (7), welche die ausgesandten Strahlungen reflektiert und zwei seitliche Längsflügel (14, 31, 75, 112, 113, 120, 128) umfasst, die bezüglich einer Axialebene (10) der Bohrung symmetrisch sind, wobei die reflektierende Fläche zumindest teilweise fest mit der Senderöhre verbunden ist und einen Querschnitt aufweist, der zumindest teilweise genau oder im wesentlichen parabolisch oder elliptisch ist, dadurch gekennzeichnet, dass der Durchmesser oder die höchste Innenabmessung der Bohrung der Röhre kleiner als oder gleich 9 mm ist; und
dass die Bereiche der reflektierenden Fläche, die den Seitenflügeln entsprechen und einen zumindest teilweise parabolischen oder elliptischen Querschnitt aufweisen, zu einer Kurve gehören, deren Erzeugende am Scheitel in einem Abstand d̲ von der Achse der Bohrung auf der Axialsymmetrieebene gelegen ist, sodass

$$d = f \text{ und } 0 < d < r + e + 1 \text{ mm,}$$

wobei

f: der Abstand zwischen dem Brennpunkt der Parabel (B) oder der Ellipse (F) und der entsprechenden Erzeugenden am Scheitel (9) ist,
r : der Abstand zwischen der Achse (4) und der Innenfläche der Bohrung auf der Axialebene auf der Seite der Erzeugenden am Scheitel ist, und
e̲ : die Stärke der Röhre auf der Axialebene (10) auf der Seite der Erzeugenden am Scheitel (9) ist.

**2.** Vorrichtung nach Anspruch 1, dadurch gekennzeichnet, dass d = r + e.

**3.** Vorrichtung nach Anspruch 1, dadurch gekennzeichnet, dass r ≤ d < r + e.

**4.** Vorrichtung nach Anspruch 1, dadurch gekennzeichnet, dass d ≤ r.

**5.** Vorrichtung nach einem der vorstehenden Ansprüche, dadurch gekennzeichnet, dass die Bohrung zylindrisch ist.

**6.** Vorrichtung nach einem der Ansprüche 1 bis 4, dadurch gekennzeichnet, dass der Querschnitt der Bohrung (93) eine kreisrunde Form aufweist, die zumindest teilweise abgeschnitten ist.

**7.** Vorrichtung nach einem der vorstehenden Ansprüche, dadurch gekennzeichnet, dass die ganze reflektierende Fläche fest mit der Röhre verbunden ist.

**8.** Vorrichtung nach Anspruch 7, dadurch gekennzeichnet, dass die Außenwand der Röhre eine Auswölbung (20) aufweist, die bezüglich der Bohrung auf der Seite der Erzeugenden am Scheitel angeordnet ist, mit einer Außenfläche, die an die Innenfläche der Bohrung angepasst und so vorgesehen ist, dass sie die zu der Auswölbung gesandten Strahlungen in Richtung auf den Mittelpunkt der Bohrung zurückwirft, welche Auswölbung mit einer Schicht aus reflektierendem Material (11) überzogen ist.

**9.** Vorrichtung nach einem der Ansprüche 7 und 8, dadurch gekennzeichnet, dass die Röhre eine massive Röhre ist zwischen den Enden der Seitenflügel (13, 14), deren Innenflächen zumindest teilweise die reflektierende Fläche durch dioptrische Strahlenbrechung bilden.

**10.** Vorrichtung nach einem der Ansprüche 7 und 8, dadurch gekennzeichnet, dass die reflektierende Fläche ganz mit einer Schicht aus reflektierendem Material überzogen ist.

**11.** Vorrichtung nach einem der Ansprüche 7 bis 10, dadurch gekennzeichnet, dass die reflektierende Fläche einen parabolischen oder teilweise parabolischen Querschnitt hat und die Röhre eine äußere Fläche (15) umfasst, welche die Enden der Flügel verbindet, die sich auf der zur Erzeugenden am Scheitel bezüglich der Bohrung entgegengesetzten Seite befindet und eben und senkrecht zur Axialebene ist, die die Erzeugende am Scheitel enthält.

**12.** Vorrichtung nach einem der Ansprüche 7 bis 10, dadurch gekennzeichnet, dass die reflektierende Fläche einen elliptischen oder teilweise elliptischen Querschnitt hat und die Röhre eine äußere Fläche (38) umfasst, welche die Enden der Flügel miteinander verbindet, die sich auf der zur Erzeugenden am Scheitel bezüglich der Bohrung entgegengesetzten Seite befindet, konkav entsprechend einer bezüglich der die Erzeugende am Scheitel enthaltenden Axialebene symmetrischen Kurve ist, wobei die Außenfläche so angeordnet ist, dass sie die ausgesandten Strahlen zumindest teilweise in Richtung auf die Axialebene der Bohrung lenkt.

**13.** Vorrichtung nach einem der Ansprüche 7 bis 12, dadurch gekennzeichnet, dass die Röhre auf der der Erzeugenden am Scheitel entgegengesetzten Seite einen vollen Quarzbereich umfasst, der teilweise ausgehöhlt ist und eine strahlenbrechende längs angeordnete Aushöhlung bildet, wobei der ausgehöhlte Bereich eine konvexe Seite in Form eines Zylinderabschnitts aufweist, die auf die Seite der Achse der Röhre gelenkt ist und in einem Abstand r + e von dieser Achse angeordnet ist.

**14.** Vorrichtung nach Anspruch 13, dadurch gekennzeichnet, dass der Querschnitt der Außenfläche in einem ersten, bezüglich der Axialebene zentrierten Bereich eben und in einem zweiten Bereich gewölbt ist.

**15.** Vorrichtung nach einem der vorstehenden, von Anspruch 8 abhängigen Ansprüche, dadurch gekennzeichnet, dass die Auswölbung (20, 32) eine reflektierende Außenfläche (51, 52, 53) aufweist, die sich in einem Abstand x von der Achse der Bohrung befindet, sodass:
$r < x \leq 2y$,
wobei
y : der Abstand zwischen der Innenfläche der Bohrung und dem Unterbrechungspunkt der Neigung der reflektierenden Fläche des Flügels ist.

**16.** Vorrichtung nach einem der vorstehenden, von Anspruch 9 abhängigen Ansprüche, dadurch gekennzeichnet, dass sie ferner reflektierende, längs angeordnete Seitenplatten (48) umfasst, die beidseits der Enden der Flügel symmetrisch bezüglich der Axialebene (10) angeordnet sind.

**17.** Vorrichtung nach Anspruch 8, dadurch gekennzeichnet, dass die Röhre in Form eines Zylinders vorgesehen ist, der mit zwei seitlichen, längs angeordneten Armen (73) versehen ist, die bezüglich der Axialebene symmetrisch sind, die durch die Erzeugende am Scheitel führt, die in Richtung auf die Bestrahlungsebene gerichtet sind und deren jeweilige Außenflächen Flügel in Form von Parabel- oder Ellipsenabschnitten bilden.

**18.** Vorrichtung nach Anspruch 17, dadurch gekennzeichnet, dass die Endflächen (79) der Arme zu der Axialebene, die die Erzeugende am Scheitel enthält, senkrecht verlaufen.

**19.** Vorrichtung nach Anspruch 17, dadurch gekennzeichnet, dass die Endflächen der Arme konkav und so vorgesehen sind, dass sie die auf diese Flächen einfallenden Strahlungen in Richtung auf die Axialebene der Bohrung lenken, die die Erzeugende am Scheitel enthält.

20. Vorrichtung nach einem der Ansprüche 17 bis 19, dadurch gekennzeichnet, dass die zylindrische Bohrung an ihrer Innenseite, die zur Erzeugenden am Scheitel entgegengesetzt ist, zwei Einkerbungen (83) mit dreieckigem Querschnitt aufweist, die symmetrisch bezüglich der Axialebene sind, die die Erzeugende am Scheitel enthält, wobei die Einkerbungen jeweils eine Wand umfassen, die parallel zur Axialebene ist, und so vorgesehen sind, dass der Winkel im Mittelpunkt der Bohrung, in den sie sich einfügen, durch die beiden Endspitzen des entsprechenden Arms führt.

21. Vorrichtung nach einem der vorstehenden Ansprüche, dadurch gekennzeichnet, dass die Bohrung (34) auf der bezüglich der Achse zu der Erzeugenden am Scheitel entgegengesetzten Seite eine Innenfläche umfasst, die mit einer dioptrischen, längs angeordneten Aussparung (60) versehen ist und eine Innenwand in Form eines Zylinderabschnitts umfasst, dessen Radius r' gleich oder ungleich r ist, sowie Seitenflächen, die parallel zur Axialebene der Bohrung sind.

22. Vorrichtung (110) nach einem der Ansprüche 1 bis 6, dadurch gekennzeichnet, dass der obere Abschnitt der Außenfläche der Röhre mit einem reflektierenden Material überzogen ist, sowie dadurch, dass die beiden Seitenflügel (112, 113, 120) vollkommen mit Abstand von der Senderöhre angeordnet sind.

23. Vorrichtung nach Anspruch 22, dadurch gekennzeichnet, dass die Seitenflügel (120), die sich gänzlich beabstandet von der Röhre befinden und einen Querschnitt aufweisen, der zumindest teilweise parabolisch oder elliptisch ist, im oberen Bereich durch einen zylindrischen Abschnitt (121) verlängert sind, der koaxial zur Bohrung ist.

24. Vorrichtung nach dem von Anspruch 1 abhängigen Anspruch 22, dadurch gekennzeichnet, dass die beiden Seitenflügel aus reflektierenden, längs angeordneten Platten bestehen.

25. Vorrichtung nach einem der vorstehenden Ansprüche, dadurch gekennzeichnet, dass die Röhre Elektrodenkammern (154) mit einem Innenquerschnitt umfasst, der größer als der oder gleich dem Innenquerschnitt des strahlungssendenden Bündels der Röhre ist.

26. Vorrichtung nach einem der vorstehenden Ansprüche, dadurch gekennzeichnet, dass der konstante Querschnitt des Plasmabündels kleiner als eine oder gleich einer Größenordnung von 45 mm$^2$, einer Größenordnung von 30 mm$^2$ oder auch einer Größenordnung von 10 mm$^2$ ist.

27. Apparat (200) zur Behandlung von schichtweise, reihenweise oder zylindrisch angeordneten Produkten mit ultravioletten Strahlen, der zumindest eine Vorrichtung (201) nach einem der vorstehenden Ansprüche umfasst.

28. Trockenapparat nach Anspruch 27, dadurch gekennzeichnet, dass er Kühlvorrichtungen aufweist, die so vorgesehen sind, außerhalb zumindest eines Teils der reflektierenden Fläche der Vorrichtung ein Kühlgas passieren zu lassen.

29. Apparat nach einem der Ansprüche 27 und 28, dadurch gekennzeichnet, dass er mindestens zwei in entgegengesetzter Richtung ausgerichtete Vorrichtungen (201) umfasst.

30. Apparat nach einem der Ansprüche 27 bis 30, dadurch gekennzeichnet, dass er mehrere Vorrichtungen (201) umfasst, die bezüglich der Laufrichtung der zu behandelnden Produkte schräg angeordnet sind.

31. Apparat nach einem der Ansprüche 27 bis 30, dadurch gekennzeichnet, dass er mehrere Vorrichtungen umfasst, die winklig zueinander angeordnet sind.

32. Verfahren zur Beaufschlagung eines schichtweise oder auf einer ebenen oder gekrümmten Fläche angeordneten Produkts mit Strahlungen, dadurch gekennzeichnet, dass man das Produkt mit einem Plasmabündel ultravioletter Strahlungen bestrahlt, das um eine Achse herum vorgesehen ist, einen konstanten Querschnitt aufweist, der kleiner als eine oder gleich einer Größenordnung von 45 mm$^2$ ist, wobei das Bündel in einer Elektrodenröhre der Vorrichtung des Anspruchs 1 erzeugt wird.

33. Verfahren nach Anspruch 32, dadurch gekennzeichnet, dass man das Produkt mit einem zylindrischen Plasmabündel ultravioletter Strahlungen bestrahlt, das um eine Achse herum vorgesehen ist und einen Querschnitt aufweist, der kleiner als eine oder gleich einer Größenordnung von 30 mm$^2$ ist.

34. Verfahren nach Anspruch 33, dadurch gekennzeichnet, dass man das Produkt mit einem zylindrischen Plasmabündel ultravioletter Strahlungen bestrahlt, das um eine Achse herum vorgesehen ist und einen Querschnitt hat, der konstant und kleiner als eine oder gleich einer Größenordnung von 10 mm$^2$ ist.

35. Verfahren nach einem der Ansprüche 32 bis 34, dadurch gekennzeichnet, dass man das Produkt mit Primärstrahlungen bestrahlt, die direkt aus dem Plasmabündel hervorgehen, und gleichzeitig mit Sekundärstrahlungen, die durch dioptrische Strahlenbrechung auf einer reflektierenden Wand, die einen zumindest teilweise elliptischen Querschnitt aufweist, aus den Primärstrahlungen hervorgehen.

36. Verfahren nach Anspruch 34, dadurch gekennzeichnet, dass man das Produkt mit Primärstrahlungen bestrahlt, die direkt aus dem Plasmabündel hervorgehen, und gleichzeitig mit Sekundärstrahlungen, die durch dioptrische Strahlenbrechung auf einer reflektierenden Wand, die einen zumindest teilweise parabolischen Querschnitt aufweist, aus den Primärstrahlungen hervorgehen.

37. Verfahren nach einem der Ansprüche 32 bis 36, dadurch gekennzeichnet, dass man das Produkt mit Strahlungen bestrahlt, die gänzlich direkt aus einer Begrenzungsröhre des Plasmabündels kommen und von diesem reflektiert werden, welche Röhre eine reflektierende Fläche umfasst, die fest mit der Röhre verbunden ist, die das Plasmabündel ausstrahlt.

38. Verfahren nach einem der Ansprüche 32 bis 37, dadurch gekennzeichnet, dass die Länge des zylindrischen Plasmabündels mit konstantem Querschnitt über dreißig Zentimetern liegt.

39. Verfahren nach Anspruch 38, dadurch gekennzeichnet, dass die Länge des Plasmabündels mit konstantem Querschnitt über einem Meter liegt.

40. Verfahren nach einem der Ansprüche 32 bis 39, dadurch gekennzeichnet, dass die längenbezogene Spannung des Plasmabündels einen Wert über der Größenordnung von 30 Volt/cm hat.

41. Verfahren nach Anspruch 40, dadurch gekennzeichnet, dass die längenbezogene Spannung einen Wert größer als oder gleich 50 Volt/cm, vorzugsweise 100 Volt/cm hat.

42. Verfahren nach Anspruch 32, dadurch gekennzeichnet, dass die Länge des Plasmabündels, das ultraviolette Strahlung aussendet, über einer Größenordnung von 1,50 m und die längenbezogene Spannung über 20 Volt/cm liegt.

43. Verfahren nach einem der Ansprüche 32 bis 42, dadurch gekennzeichnet, dass der Radius des Querschnitts des Plasmabündels bezüglich dem Durchmesser, der gleich d der Röhre entspricht, folgender ist:

$$\frac{1}{100}\, d \le r \le \frac{1}{2}\, d$$

44. Verfahren nach einem der Ansprüche 32 bis 43, dadurch gekennzeichnet, dass man mit einem Plasmabündel, das ultraviolette Strahlungen aussendet, in Form eines abgeschnittenen Zylinders bestrahlt.

**Claims**

1. An electromagnetic radiation transmitter/reflector device (1, 30, 70, 90, 110, 118, 132, 140) comprising a straight transparent quartz electrode tube (2, 35, 114, 141) with an end-to-end bore (3, 34, 72, 93, 111, 128, 142) for retaining an ionising gas under pressure, extending elongate around an axis (4) and defining a radiation transmitter beam, and a surface (7) for reflecting the transmitted radiation comprising two longitudinal side wings (14, 31, 75, 112, 113, 120, 128) symmetrical in relation to an axial plane (10) of the bore, said reflecting surface being at least partially secured to the transmitter tube and presenting a transverse cross section at least partially strictly or appreciably parabolic or elliptic, characterized in that the diameter or the internal maximum dimension of the bore surface of the tube is smaller or equal to 9 mm, and that the portions of reflecting surface corresponding to the side wings and presenting a transverse cross section at least partially parabolic or elliptic belong to a curve whose generating line at the peak is situated at a distance d from the axis of the bore, in the axial plane of symmetry such that :

$$d = f \text{ and } 0 < d < r + e + 1 \text{ mm}$$

with

  $f$ : distance between the focal point of the parabola (8) or ellipse (F) and the corresponding generating line at the peak (9),
  $r$ : distance between the axis (4) and the internal surface of the bore in the axial plane, on the same side as the generating line at the peak, and
  $e$ : thickness of the tube in the axial plane (10), on the same side as the generating line at the peak (9).

2. The device according to claim 1, characterized in that d = r + e.

3. The device according to claim 1, characterized in that r ≤ d < + e.

**4.** The device according to claim 1, characterized in that d ≤ r.

**5.** The device according to any one of the above claims, characterized in that the bore is cylindrical.

**6.** The device according to any one of the claims 1 to 4, characterized in that the transverse cross section of the bore (93) is of at least partially truncated circular shape.

**7.** The device according to any one of the above claims, characterized in that the reflecting surface is entirely secured to said tube.

**8.** The device according to claim 7, characterized in that the external wall of the tube comprises a dome (20) situated on the same side as the generating line at the peak in relation to the bore, of external surface designed to suit the internal wall of the bore and arranged to send the transmitted rays back to the dome, returning to the centre of the bore, said dome being covered with a layer of reflecting material (11).

**9.** The device according to either one of the claims 7 and 8, characterized in that the tube is solid between the ends of the side wings (13, 14) whose internal faces form at least partially said reflecting surface by dioptric reflection.

**10.** The device according to either one of the claims 7 and 8, characterized in that the reflecting surface is entirely covered with a coating of reflecting material.

**11.** The device according to any one of the claims 7 to 10, characterized in that the reflecting surface is of parabolic or partially parabolic cross section and the tube comprises an external face (15) joining the ends of the wings, situated on the opposite side from the generating line at the peak in relation to the bore; flat and perpendicular to the axial plane containing said generating line at the peak.

**12.** The device according to any one of the claims 7 to 10, characterized in that the reflecting surface is of elliptic or partially elliptic cross section and the tube comprises an external face (38) joining the ends of the wings, situated on the opposite side from the generating line at the peak in relation to the bore, concave, according to a curve symmetrical in relation to the axial plane containing the generating line at the peak, said external face being arranged to direct the transmitted rays at least partially towards the axial plane of the bore.

**13.** The device according to any one of the claims 7 to 12, characterized in that the tube comprises, on the opposite side from the generating line at the peak, a portion of partially recessed solid quartz forming a longitudinal dioptric cavity, said recessed part comprising a convex face shaped as a portion of a cylinder, directed towards the side where the axis of the tube is located and situated at the distance r + e from said axis.

**14.** The device according to claim 13, characterized in that the cross section of said external face is flat over a first part centred in relation to the axial plane, and curved over a second part.

**15.** The device according to any one of the above claims dependent on claim 8, characterized in that the dome (20, 32) comprises an external reflecting face (51, 52, 53) situated at a distance x from the axis of the bore, such that:
r < x ≤ 2y with
y : distance between the internal surface of the bore and the point of discontinuity of the slope of the reflecting surface of the wing.

**16.** The device according to any one of the above claims dependent on claim 9, characterized in that it comprises in addition longitudinal reflecting side plates (48) situated on each side of the ends of the wings, symmetrically in relation to the axial plane (10).

**17.** The device according to claim 8, characterized in that the tube is in the shape of a cylinder provided with two longitudinal side lugs (73) symmetrical in relation to the axial plane passing through the generating line at the peak, directed towards the irradiation plane and whose respective external surfaces form the wings in the shape of a portion of parabola or ellipse.

**18.** The device according to claim 17, characterized in that the end faces (79) of the lugs are perpendicular to the axial plane containing the generating line at the peak.

**19.** The device according to claim 17, characterized in that the end faces of the lugs are concave and arranged to direct the incident rays on said faces towards the axial plane of the bore containing the generating line at the peak.

**20.** The device according to any one of the claims 17 to 19, characterized in that the cylindrical bore comprises on its internal surface opposite the generating line at the peak, two protuberances (83) of triangular cross section symmetrical in relation to the axial plane containing said generating line at the peak, said protuberances each comprising a wall parallel to the axial plane and such that the angle at the centre of the bore in which they are inscribed passes via the two end tips of the corresponding lug.

21. The device according to any one of the above claims, characterized in that the bore (34) comprises an internal face, on the side opposite the generating line at the peak in relation to the axis, provided with a longitudinal dioptric recess (60) presenting a bottom wall in the form of a portion of cylinder of radius r' equal to or different from r and side walls parallel to the axial plane of the bore.

22. A device (110) according to any one of the claims 1 to 6, characterized in that the upper portion of the external surface of the tube is covered with a reflecting material, and that the two side wings (112, 113, 120) are entirely situated at a distance from the transmitter tube.

23. The device according to claim 22, characterized in that the side wings (120) entirely situated at a distance from the tube and presenting an at least partially parabolic or elliptic cross section, are extended at the upper part by a cylindrical portion (121) coaxial with the bore.

24. The device according to claim 22 dependent on claim 1, characterized in that the two side wings are formed by longitudinal reflecting plates.

25. The device according to any one of the above claims, characterized in that the tube comprises electrode chambers (154) of internal cross section greater than or equal to the internal cross section of the radiation transmitter beam of said tube.

26. The device according to any one of the above claims, characterized in that the maximum cross section of the transmitter beam is smaller than or equal to about 45 mm$^2$, to about 30 mm$^2$ or even to about 10 mm$^2$.

27. An apparatus (200) for processing products arranged as a flat sheet, a wire or a cylinder, by ultraviolet rays, comprising at least one device (201) according to any one of the above claims.

28. A drying apparatus according to claim 27, characterized in that it comprises cooling means arranged to make a cooling gas flow outside at least a part of the reflecting surface of the device.

29. The apparatus according to either one of the claims 27 and 28, characterized in that it comprises at least two devices (201) directed in the opposite.

30. The apparatus according to any one of the claims 27 to 29, characterized in that it comprises several devices (201) arranged obliquely in relation to the running direction of the products to be processed.

31. The apparatus according to any one of the claims 27 to 30, characterized in that it comprises several devices arranged angularly in relation to one another.

32. A process for applying rays to a product in the form of a sheet or disposed on a flat or curved surface, characterized in that said product is irradiated with an ultraviolet ray plasma beam extended elongate around an axis of constant transverse cross section smaller than or equal to about 45 mm$^2$, said beam being generated in an electrode tube according to the device of Claim 1.

33. The process according to claim 32, characterized in that said product is irradiated with a cylindrical ultraviolet ray plasma beam extended elongate around an axis of cross section smaller than or equal to about 30 mm$^2$.

34. The process according to claim 33, characterized in that said product is irradiated with a cylindrical ultraviolet ray plasma beam extended elongate around an axis of constant transverse cross section smaller than or equal to about 10 mm$^2$.

35. The process according to any one of the claims 32 to 34, characterized in that the product is irradiated with primary rays originating directly from the plasma beam and simultaneously with secondary rays originating from the primary rays by dioptric refraction on a reflecting wall presenting an at least partially elliptic transverse cross section.

36. The process according to claim 34, characterized in that the product is irradiated with primary rays originating directly from the plasma beam and simultaneously with secondary rays originating from the primary rays by dioptric refraction on a reflecting wall presenting an at least partially parabolic transverse cross section.

37. The process according to any one of the claims 32 to 36, characterized in that the product is irradiated with rays entirely originating from and reflected by a single tube confining the plasma beam, comprising a reflecting surface securely united to the transmitter tube of said plasma beam.

38. The process according to any one of the claims 32 to 37, characterized in that the length of the cylindrical plasma beam of constant cross section is greater than thirty centimetres.

**39.** The process according to claim 38, characterized in that the length of the plasma beam of constant cross section is greater than one metre.

**40.** The process according to any one of the claims 32 to 39, characterized in that the linear voltage of the plasma beam has a value greater than about 30 Volts/cm.

**41.** The process according to claim 40, characterized in that the linear voltage has a value greater than or equal to 50 Volts/cm, advantageously 100 Volts/cm.

**42.** The process according to claim 32, characterized in that the length of the plasma beam transmitting the ultraviolet rays is greater than about 1m50 and the linear voltage is greater than 20 Volts/cm.

**43.** The process according to any one of the claims 32 to 42, characterized in that the radius of the transverse cross section of the plasma beam, in relation to the diameter equivalent to d of the tube is such that:

$$\frac{1}{100}\,d \le r \le \frac{1}{2}\,d$$

**44.** The process according to any one of the claims 32 to 43, characterized in that irradiation is performed with a plasma beam transmitting ultraviolet rays in the shape of a truncated cylinder.

EP 0 910 772 B1

FIG. 1

FIG. 2

27

FIG. 3

FIG. 4

EP 0 910 772 B1

FIG. 5

29

FIG. 7

FIG. 6

FIG. 7 A

FIG. 9

FIG. 8

FIG. 10

FIG. 11

FIG. 12

FIG. 12A

FIG. 13

FIG. 14

FIG. 15

FIG. 16

FIG. 17

FIG. 18

FIG. 18 A

FIG. 18 B

FIG. 19

FIG. 19 A

# FIG. 19 B

108

$S_1$

$\alpha_L$

109

$S_2$

109'

109''

$\alpha_1$

$\alpha_2$

FIG. 20

FIG. 21

FIG. 22

FIG. 23

FIG. 24

FIG. 25

EP 0 910 772 B1

FIG. 26A

FIG. 26B

44

# FIG. 27A

EP 0 910 772 B1

FIG. 27 A'

FIG. 27 B

FIG. 27 C

46

140

147

149

β

FIG. 27 D

FIG. 28

FIG. 29

FIG. 30

FIG. 31

FIG. 31A

# FIG. 32

A

A´

B

C

D

D´

E

FIG. 33

FIG. 34

FIG. 35

FIG. 36

200

221

219

200

FIG. 37

201

201

200

FIG. 38

A

B

C

FIG. 39

FIG. 40 B

FIG. 40 A

FIG.41